# EUROPÄISCHE PATENTSCHRIFT

(11) **EP 3 774 619 B1**
(45) Veröffentlichungstag und Bekanntmachung des Hinweises auf die Patenterteilung: **04.01.2023**
(21) Anmeldenummer: 19709934.4
(22) Anmeldetag: 08.03.2019
(51) Int. Cl.: B65H 19/30, B65G 1/04

(54) **MATERIALROLLEN-TRANSPORTWAGEN**
TROLLEY FOR ROLLS OF MATERIAL
CHARIOT DE TRANSPORT DE ROULEAUX DE MATÉRIAU

(30) Priorität: 09.04.2018 DE 102018205290
(43) Veröffentlichungstag der Anmeldung: 17.02.2021
(73) Patentinhaber: BHS Intralogistics GmbH, 93073 Neutraubling (DE)
(72) Erfinder: RUHLAND, Martin, 93057 Regensburg - Sallern-Gallingkofen (DE); RUHLAND, Karl, 92536 Pfreimd (DE)
(74) Vertreter: Rau, Schneck & Hübner Patentanwälte Rechtsanwälte PartGmbB
(86) Internationale Anmeldenummer: PCT/EP2019/055899
(87) Internationale Veröffentlichungsnummer: WO 2019/197089

(56) Entgegenhaltungen:
- DE-A1- 1 940 426
- JP-A- S 613 211
- US-A- 5 451 133
- US-B1- 6 264 417

## Beschreibung

Die Erfindung betrifft einen Transportwagen zum Transport von Materialrollen, wie Papierrollen, Papperollen oder dergleichen, insbesondere in einer Wellpappeanlage, gemäß dem Oberbegriff des Anspruchs 1. Ferner richtet sich die Erfindung auf eine Anordnung aus einem Transportwagen und einer zu transportierenden Materialrolle. Ferner ist die Erfindung auf eine Wellpappeanlage mit mindestens einem derartigen Transportwagen gerichtet.

Aus dem Stand der Technik sind auf geraden Schienen geführte Schlitten zum Transport von Materialrollen in einer Wellpappeanlage bekannt. Dieses System ist äußerst unflexibel und aufwändig.

Ferner offenbart der Stand der Technik selbstfahrende Transportwagen, die im Einsatz Anlagen beziehungsweise Maschinen bestücken. Diese Transportwagen bauen sehr aufwändig und sind somit sehr kostspielig. Nachteilig ist außerdem, dass bei gleichzeitig abzuarbeitenden Aufträgen, wie bei einem Breitenwechsel einer Wellpappebahn, im Allgemeinen ein Engpass aufgrund der seriellen Abarbeitung des Auftrags entsteht. Es können nur wenige Transportwagen, meistens maximal 2 bis 5, zum Einsatz kommen, da diese sich sonst gegenseitig behindern würden, was vor allem bei Gegenverkehr der Fall ist. Außerdem wäre der Einsatz mehrerer derartiger Transportwagen mit einem nicht unerheblichen Kostenaufwand verbunden.

Die gattungsgemäße JP S61-3211 A offenbart ein automatisch geführtes Fahrzeug, das beispielsweise in einer Fabrik eingesetzt wird und imstande ist, Adressen auf einem Verfahrweg zu lesen. Es umfasst einen Lichtstrahl-Projektor und ein Paar Lichtstrahl-Empfänger. Das Fahrzeug weist ferner eine Recheneinheit mit einer Prozessoreinheit und eine Antriebseinheit sowie Steuereinheit auf. Es ist imstande, die Richtung zu ändern, abzubremsen und zu stoppen. Wenn das Fahrzeug schwer beladen wird, führt dies häufig zu einer Beschädigung desselben.

Die US 6 264 417 B1 offenbart eine Rollen-Spannanordnung, die eine Ausrichtung einer Materialrolle nach einer Spanneinrichtung erlaubt. Ein angetriebenes Shuttlefahrzeug ist auf Schienen geführt. Es ist imstande, eine Palette zu transportieren, die die Rolle trägt. Das Shuttlefahrzeug umfasst einen starren Rahmen und ein Tragelement zum Tragen der Rolle. Das Tragelement ist in dem Rahmen gelagert. Wenn das Shuttlefahrzeug zu einer Spannposition fährt, hebt dessen Lift die Rolle an. Jedes Tragelement umfasst einen Kompressionskopf, der durch eine Vielzahl von Federn vorgespannt ist. Diese Federn sind ausgebildet, um teilweise deformiert zu werden, wenn die Rolle angehoben wird.

Aus der DE 1 940 426 A ist eine Vorrichtung für den Abtransport von Blechbunden von Aufwickelvorrichtungen bekannt.

Aus der US 5 451 133 ist ein automatisch geführtes Fahrzeug bekannt, das einen Rahmen umfasst.

Die DE 10 2016 218 106 A1 offenbart eine Vorrichtung zur Entnahme einer Materialrolle von einem Rollenträger einer materialbahnverarbeitenden Maschine, insbesondere einer Rollendruckmaschine. Eine abzugebende Materialrolle ist von einer Entnahmeeinrichtung aufnehmbar und in eine Speicherposition bringbar. Die Entnahmeeinrichtung hat eine Übernahmeeinrichtung, die entlang einer definierten Wegstrecke verlagerbar ist und einen Unterbau, zum Beispiel in Art eines Wagens, aufweist. Für die Verlagerbarkeit ist an der Übernahmeeinrichtung ein Antriebsmotor angeordnet. Diese Vorrichtung ist äußerst unflexibel und aufwändig.

Die DE 37 31 488 A1 offenbart eine Wellpappemaschine mit einem Rollenständer. Zum Hin- und Herbewegen zwischen einem Lagerplatz und dem Rollenständer dient eine Fördervorrichtung, die eine im Boden vorgesehene Führungsrille und einen entlang der Führungsrille frei laufend vorgesehenen Wagen aufweist. Jedes Ende einer antreibbaren Zugregulierkette ist mit dem Wagen verbunden.

Der Erfindung liegt die Aufgabe zugrunde, die Nachteile des Stands der Technik zu überwinden. Insbesondere soll ein Transportwagen geschaffen werden, der äußerst flexibel und einfach sowie kostengünstig ist. Eine entsprechende Anordnung aus einem Transportwagen und einer zu transportierenden Materialrolle soll außerdem bereitgestellt werden. Ferner soll eine entsprechende Wellpappeanlage mit mindestens einem derartigen Transportwagen geliefert werden.

Diese Aufgabe wird erfindungsgemäß durch die in den Hauptansprüchen 1 und 16 angegebenen Merkmale gelöst. Der Kern der Erfindung liegt in einem Transportwagen bzw. -trolley, der mindestens einen eigenen Verfahrantrieb zum, insbesondere direkten oder indirekten, Antreiben von mindestens einer antreibbaren Laufeinheit umfasst. Ferner hat dieser eine Kommunikationseinrichtung mit einer Empfangseinheit zum Empfangen externer Informationen bzw. Signale, die beispielsweise Fahr-, Ziel- und/oder Umgebungsinformationen sind.

In der Materialrollenaufnahme ist eine Materialrolle aufnehmbar, die durch eine aufgerollte Materialbahn gebildet ist und bevorzugt zur Herstellung von Wellpappe benötigt wird. Die Materialrollenaufnahme ist günstigerweise von oben zugänglich. Sie erstreckt sich vorzugsweise längs des Transportwagens. In der Materialrollenaufnahme ist aber auch eine leere innere Traghülse einer Materialrolle aufnehmbar.

Das Gestell ist günstigerweise selbsttragend. Es ist von Vorteil, wenn das Gestell einteilig ist. Alternativ ist das Gestell mehrteilig.

Die Laufeinheiten sind vorzugsweise als Radeinheiten ausgeführt, die beispielsweise jeweils ein Rad oder ein Doppelrad umfassen. Alternativ sind die Laufeinheiten beispielsweise Ketteneinheiten oder Gleiteinheiten. Kombinationen sind möglich. Die Laufeinheiten sind vorzugsweise direkt oder indirekt an dem Gestell angeordnet bzw. an diesem gelagert.

Der Untergrund ist vorzugsweise aus Beton, insbesondere Faserbeton, gebildet. Er erstreckt sich vorzugsweise horizontal. Der mindestens eine Transportwagen ist vorzugsweise horizontal verfahrbar.

Der mindestens eine Verfahrantrieb ist vorzugsweise als Elektroantrieb ausgebildet. Er ist vorzugsweise direkt oder indirekt an dem Gestell angeordnet. Der mindestens eine Verfahrantrieb steht günstigerweise mit der/den anzutreibenden Laufeinheit/en in direkter oder indirekter Antriebsverbindung. Er hat einen Motor.

Die Kommunikationseinrichtung arbeitet vorzugsweise drahtlos. Es ist zweckmäßig, wenn die Kommunikationseinrichtung neben einer Empfangseinheit zum Empfangen externer Informationen, beispielsweise von einer zentralen Steuereinrichtung und/oder einer Hilfs-Steuerung, auch eine Sendeeinheit zum Senden von Informationen bzw. Signalen, beispielsweise von jeweiligen Positions-, Fahr-, Umgebungs- und/oder Beladungsinformationen, an die zentrale Steuereinrichtung umfasst. Der Transportwagen ist vorzugsweise zu beliebigen Stellen schickbar. Er ist bevorzugt schienenlos verfahrbar.

Durch eine zentrale Steuereinrichtung ist der Transportwagen besonders einfach ausführbar. Die zentrale Steuereinrichtung koordiniert vorzugsweise den mindestens einen Transportwagen, günstigerweise eine Vielzahl an Transportwagen.

Der Transportwagen ist aufgrund der Abstützung der Materialrollenaufnahme gegenüber dem Gestell mittels mindestens einer Federeinheit besonders langlebig. Insbesondere bei Beladung des Transportwagens mit einer zu schweren Materialrolle erfolgt eine vertikale Verlagerung der Materialrollenaufnahme gegenüber dem Gestell unter Kompression der mindestens einen Federeinheit. Die mindestens eine Federeinheit ist vorzugsweise Bestandteil einer Überlastschutzeinrichtung. Sie wirkt günstigerweise in einer vertikalen Richtung.

Es ist von Vorteil, wenn die Federeinheit als verformbarer Materialblock oder Feder ausgeführt ist. Die Feder kann beispielsweise eine Gasfeder, Hydraulikfeder oder metallische Feder, wie Schraubenfeder oder Tellerfeder, sein. Die maximale Traglast des Transportwagens liegt vorzugsweise zwischen 4 t und 6 t.

Der Transportwagen ist aufgrund des mindestens einen Abstützelements besonders langlebig. Das mindestens eine Abstützelement ist vorzugsweise plattenartig und formstabil. Es ist vorzugsweise gegenüber dem Gestell, insbesondere bei Überlast, verlagerbar.

Weitere vorteilhafte Ausgestaltungen der Erfindung sind in den Unteransprüchen angegeben.

Die Materialrollenaufnahme ist vorzugsweise rinnenartig. Diese Ausgestaltung ergibt einen Transportwagen, der einen äußerst sicheren Transport der zu transportierenden Materialrolle erlaubt. Ferner sind so besonders gefahrlos Materialrollen mit unterschiedlichen Außendurchmessern aufnehmbar bzw. transportierbar. Eine Zentrierung der Materialrolle gegenüber dem Transportwagen in Querrichtung der Materialrolle ist so einfach erreichbar. Die Materialrollenaufnahme ist bevorzugt durch eine entsprechende Wandung seitlich bzw. längsseitig begrenzt. Sie hat vorzugsweise einen Boden und einander gegenüberliegende Seitenführungen. Die Materialrollenaufnahme bzw. Wandung weist beispielsweise mindestens einen gekrümmten und/oder geraden Abschnitt auf.

Die Materialrollenaufnahme ist günstigerweise in Längsrichtung unbegrenzt. Diese Ausgestaltung erlaubt eine relative Längsverlagerung zwischen dem Transportwagen und einer aufzunehmenden bzw. abzugebenden Materialrolle, die gegenüber dem Transportwagen, insbesondere geringfügig, angehoben ist. Der Transportwagen ist so einfach längs der Materialrollenaufnahme bzw. der Materialrolle unter die angehobene Materialrolle fahrbar bzw. von dieser wegfahrbar. Es erfolgt dabei eine Verlagerung in Achsrichtung der Materialrolle. Kollisionspunkte zwischen dem Transportwagen und der Materialrolle existieren nicht. Die Materialrollenaufnahme ist so in ihrer Längsrichtung vorzugsweise offen bzw. frei.

Der Transportwagen gemäß dem Unteranspruch 2 hat in beladenem Zustand einen äußerst tiefen Schwerpunkt und ist so besonders kippsicher. Ferner ist so eine funktionssichere Übergabe zwischen einer Materialrolle und einer Bahn-Abgabevorrichtung der Wellpappeanlage möglich.

Die Führung gemäß dem Unteranspruch 4 ist günstigerweise durch mindestens zwei benachbart zueinander angeordnete Körper, Flanken, Wände oder dergleichen der Materialrollenaufnahme und des Gestells gebildet.

Der Transportwagen gemäß dem Unteranspruch 5 ist vorzugsweise eigenständig antreibbar. Es ist zweckmäßig, wenn die Energiespeichereinheit als Batterie oder Akkumulator ausgeführt ist. Bei Entladung wird vorzugsweise gespeicherte chemische Energie durch elektrochemische Reaktion in elektrische Energie umgewandelt. Der Transportwagen ist so von einem Stromnetz bzw. einer Hausinstallation unabhängig.

Es ist zweckmäßig, wenn die Energiespeichereinheit, insbesondere induktiv, aufladbar ist. Günstigerweise ist die Energiespeichereinheit bei fahrendem und/oder stehendem Transportwagen aufladbar.

Der Materialrollen-Erkennungssensor gemäß dem Unteranspruch 6 ist beispielsweise als Gewichtssensor oder optischer Sensor ausgeführt. Es ist zweckmäßig, wenn der Materialrollen-Erkennungssensor der Materialrollenaufnahme zugeordnet ist. Er ist insbesondere im Stande zu erkennen, ob der Transportwagen beladen oder unbeladen ist. Es ist von Vorteil, wenn eine entsprechende Information über die Kommunikationseinrichtung an die zentrale Steuereinrichtung der Wellpappeanlage schickbar ist.

Die mindestens eine Sicherheitseinrichtung gemäß dem Unteranspruch 7 ist vorzugsweise optischer Art. Sie ist beispielsweise als Kamera, Sensor oder dergleichen ausgebildet. Es ist zweckmäßig, wenn die mindestens eine Sicherheitseinrichtung über die Kommunikationseinrichtung gegebenenfalls entsprechende Gefahreninformationen an die zentrale Steuereinrichtung schickt. Es ist von Vorteil, wenn die mindestens eine Sicherheitseinrichtung im Einsatz unbewegliche und/oder bewegliche Gegenstände erfasst.

Insbesondere übernimmt die zentrale Steuereinrichtung auch die Überwachung von mindestens einem Gefahren- bzw. Schutzbereich. Eine Zugangskontrolle zu dem mindestens einen Schutzbereich erfolgt beispielsweise elektronisch-optisch, insbesondere mittels mindestens einer (Laser)Lichtschranke bzw. eines Lichtvorhangs. Günstigerweise wird der mindestens eine sich in dem Schutzbereich befindende Transportwagen dann bei erkannter Gefahr sofort außer Betrieb gesetzt.

Eine Freigabe nach erkannter Gefahr erfolgt vorzugsweise durch eine Bedienperson, beispielsweise durch Quittieren. Alternativ ist eine Freigabe automatisch mittels eines Transponders an der Bedienperson, insbesondere an deren Kleidung, möglich. Sobald die Bedienperson den Schutzbereich verlässt, wird dieser günstigerweise wieder freigegeben und der mindestens eine außer Betrieb gesetzte Transportwagen erneut in Betrieb gesetzt. Die zentrale Steuereinrichtung steuert vorzugsweise ein zentrales Sicherheitskonzept, sodass der mindestens eine Transportwagen vergleichsweise einfach ausführbar ist.

Die mindestens eine Verfahrweg-Erkennungseinrichtung gemäß dem Unteranspruch 8 ist günstigerweise optischer Art. Sie ist vorzugsweise als Kamera, Sensor oder dergleichen ausgebildet. Es ist zweckmäßig, wenn die mindestens eine Verfahrweg-Erkennungseinrichtung im Stande ist, eine entsprechende Verfahrwegvorgabeanordnung als Verfahrweg, die beispielsweise als Markierung auf einem Untergrund, wie einem Hallenboden, ausgebildet ist, zu erkennen. Der Transportwagen folgt der Verfahrwegvorgabeanordnung.

Die Verfahrwegmarkierung ist vorzugsweise durch einen Anstrich bzw. Farbe gebildet und ist günstigerweise linienförmig. Sie ist beispielsweise unterbrochen oder unterbrechungslos. Sie ist beispielsweise sichtbar oder unsichtbar.

Es ist zweckmäßig, wenn die Verfahrwegvorgabeanordnung gemäß einer Ausführungsform zumindest teilweise durch Energieversorgungsspulen gebildet ist, die günstigerweise im Untergrund angeordnet sind. Alternativ ist sie beispielsweise durch einen Draht gebildet, der auf oder in dem Untergrund angeordnet ist.

Es ist zweckmäßig, wenn ein geschlossener, insbesondere vollautomatischer, Materialrollen- bzw. Transportwagen-Kreislauf vorliegt. Der Verfahrweg ist vorzugsweise beliebig vorgebbar, was die Planung der übrigen Infrastruktur vereinfacht. Alternativ ist der mindestens eine Transportwagen entlang eines imaginären Verfahrwegs verfahrbar, der beispielsweise in einer Software definiert ist. Unter einem imaginären Verfahrweg wird insbesondere ein Verfahrweg verstanden, der nicht real bzw. nicht greifbar vorgegeben ist. Der imaginäre Verfahrweg kann beispielsweise auch als fiktiv vorgegebener Verfahrweg bezeichnet werden. Der mindestens eine Transportwagen ist beispielsweise über eine Softwaresteuerung steuerbar.

Der Transportwagen gemäß dem Unteranspruch 11 ist auch vor Ort ansteuerbar. Die externe Hilfs-Steuerung ist vorzugsweise eine tragbare Fernbedienung. Es ist zweckmäßig, wenn die Verbindung zwischen der Hilfs-Steuereinrichtung und der Hilfs-Steuerung drahtlos oder drahtgebunden ist. Eine unidirektionale oder bidirektionale Signal- bzw. Informationsübertragung ist vorzugsweise möglich. Beispielsweise ist so ein Überholen anderer Transportwagen möglich. Insbesondere ist so ein Steuern bzw. Fahren des Transportwagens abseits des eigentlichen Verfahrwegs möglich. Die Energie kommt dann vorzugsweise aus der Energiespeichereinheit.

Die Ausgestaltung gemäß dem Unteranspruch 12 führt zu einem besonders sicheren Transportwagen. Die mindestens eine Notaus-Einrichtung hat vorzugsweise mindestens einen gut zugänglichen und sichtbaren, manuell betätigbaren Notaus-Schalter. Günstigerweise ist die mindestens eine Notaus-Einrichtung im Stande, den Transportwagen bei Betätigung sofort zu stoppen. Es ist von Vorteil, wenn dazu die betätigte Notaus-Einrichtung die Energiezufuhr zu dem mindestens einen Verfahrantrieb sofort unterbricht.

Gemäß dem Unteranspruch 13 ist der Transportwagen eigenständig ansteuerbar. Er ist insbesondere selbstfahrend. Wenn mehrere Transportwagen vorhanden sind, so sind diese unterschiedlich ansteuerbar bzw. verfahrbar.

Gemäß dem Unteranspruch 14 ist der Transportwagen lenkbar. Er ist im Stande, gerade zu fahren. Ferner ist eine Kurvenfahrt bzw. ein Wenden möglich. Dies macht den Transportwagen äußerst flexibel. Der Transportwagen ist vorzugsweise frei von fest vorgegebenen Verfahrwegen verfahrbar. Er ist beispielsweise imstande, eine Kurvenfahrt bzw. ein Wenden durchzuführen, wenn beispielsweise seine Empfangseinheit entsprechende, direkte oder indirekte, Informationen, zum Beispiel von der zentralen Steuereinrichtung, empfängt. Bevorzugt ist eine Lenkung des Transportwagens bzw. Auslenkung von mindestens einer Laufeinheit durch eine Steuerung des Transportwagens bzw. durch entsprechende Signale herbeiführbar.

Beispielsweise ist mindestens eine Laufeinheit auslenkbar. Dies kann zum Beispiel gezielt durch eine betätigbare Lenkeinrichtung erfolgen. Alternativ sind beispielsweise zwei Verfahrantriebe vorhanden, die getrennt bzw. unabhängig voneinander ansteuerbar sind und mit entsprechenden Laufeinheiten in Antriebsverbindung stehen. Bei identischer Ansteuerung der Verfahrantriebe fährt der Transportwagen gerade, während dieser bei unterschiedlicher Ansteuerung der Verfahrantriebe eine Kurvenfahrt bzw. ein Wendemanöver macht. Die Verfahrantriebe sind unabhängig voneinander und unterschiedlich ansteuerbar. Sie sind in gegensinnigen Drehrichtungen antreibbar.

Der Transportwagen gemäß dem Unteranspruch 15 hat eine äußerst hohe Tragfähigkeit. Ferner ist dieser besonders gut lenkbar.

Günstigerweise steht bei einer Anordnung aus einem Transportwagen und einer zu transportierenden Materialrolle die Materialrolle in ihrer Längsrichtung, insbesondere beidseitig, bevorzugt gleichmäßig, gegenüber dem Transportwagen vor. Die Materialrolle überdeckt in ihrer Längsrichtung bzw. Achsrichtung den Transportwagen vorzugsweise vollständig.

Es ist zweckmäßig, wenn die Materialrolle in ihrer Querrichtung, insbesondere beidseitig, gegenüber dem Transportwagen vorsteht. Günstigerweise steht die Materialrolle gleichmäßig gegenüber dem Transportwagen vor. Die Materialrolle überdeckt in
ihrer Querrichtung, also senkrecht zu ihrer Längsrichtung, den Transportwagen vorzugsweise vollständig.

Die Wellpappeanlage gemäß dem Hauptanspruch 16 hat günstigerweise mindestens eine Zwischenbahn-Abgabevorrichtung zum Abgeben von mindestens einer Zwischenbahn und mindestens eine Deckbahn-Abgabevorrichtung zum Abgeben von mindestens einer Deckbahn sowie eine Kaschierbahn-Abgabevorrichtung zum Abgeben einer Kaschierbahn.

Ferner umfasst die Wellpappeanlage vorzugsweise mindestens eine der mindestens einen Zwischenbahn-Abgabevorrichtung und Deckbahn-Abgabevorrichtung nachgeordnete Wellpappe-Herstellvorrichtung zum Herstellen von mindestens einer einseitig kaschierten Wellpappebahn aus der mindestens einen Deckbahn und Zwischenbahn.

Die Wellpappeanlage weist außerdem bevorzugt eine Verbindungsvorrichtung zum Verbinden der mindestens einen einseitig kaschierten Wellpappebahn mit der Kaschierbahn unter Bildung einer beidseitig kaschierten Wellpappebahn auf.

Ferner hat die Wellpappeanlage beispielsweise eine Querschneidevorrichtung zum Schneiden der beidseitig kaschierten Wellpappebahn in Bögen. Es ist zweckmäßig, wenn die Wellpappeanlage außerdem eine Stapelvorrichtung zum Stapeln der Bögen umfasst.

Die Wellpappeanlage weist außerdem vorzugsweise eine Steuereinrichtung zum Ansteuern des mindestens einen Transportwagens auf.

Nachfolgend werden unter Bezugnahme auf die beigefügte Zeichnung bevorzugte Ausführungsformen der Erfindung beispielhaft beschrieben. Dabei zeigen:
- Fig. 1: eine perspektivische Ansicht eines erfindungsgemäßen Transportwagens,
- Fig. 2: eine Explosionsansicht, die die wesentlichen Teile des in Fig. 1 gezeigten Transportwagens veranschaulicht,
- Fig. 3: einen Querschnitt durch den in Fig. 1, 2 gezeigten Transportwagen,
- Fig. 4: einen weiteren Querschnitt durch den in Fig. 1 bis 3 gezeigten Transportwagen, wobei sich dessen Federeinheiten in einem unbelasteten Zustand befinden,
- Fig. 5: einen Querschnitt entsprechend Fig. 4, wobei sich dessen Federeinheiten nun in einem belasteten, komprimierten Zustand befinden,

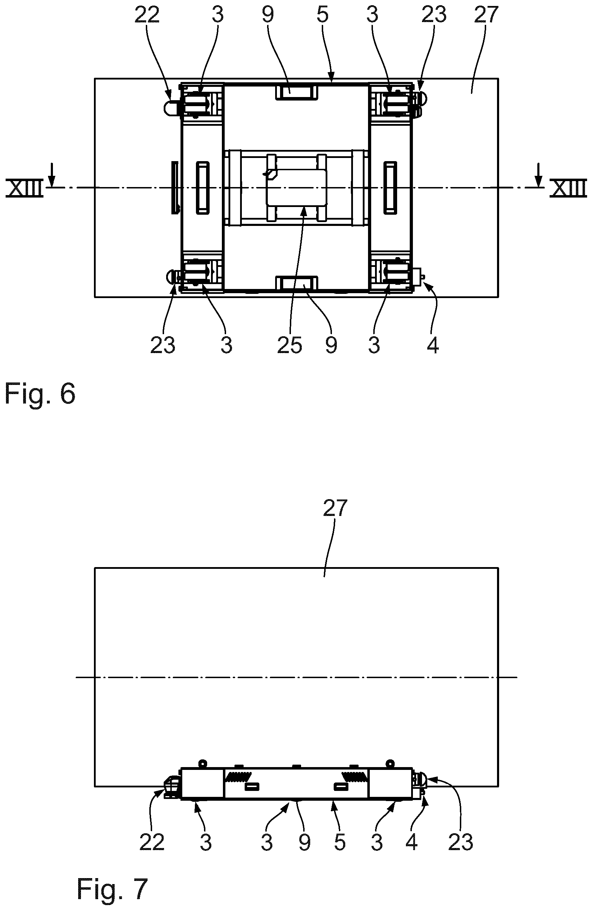

- Fig. 6: eine Ansicht von unten, die den in Fig. 1 bis 5 veranschaulichten Transportwagen und eine auf diesem angeordnete Materialrolle zeigt,
- Fig. 7: eine Seitenansicht der in Fig. 6 gezeigten erfindungsgemäßen Anordnung aus Transportwagen und Materialrolle,

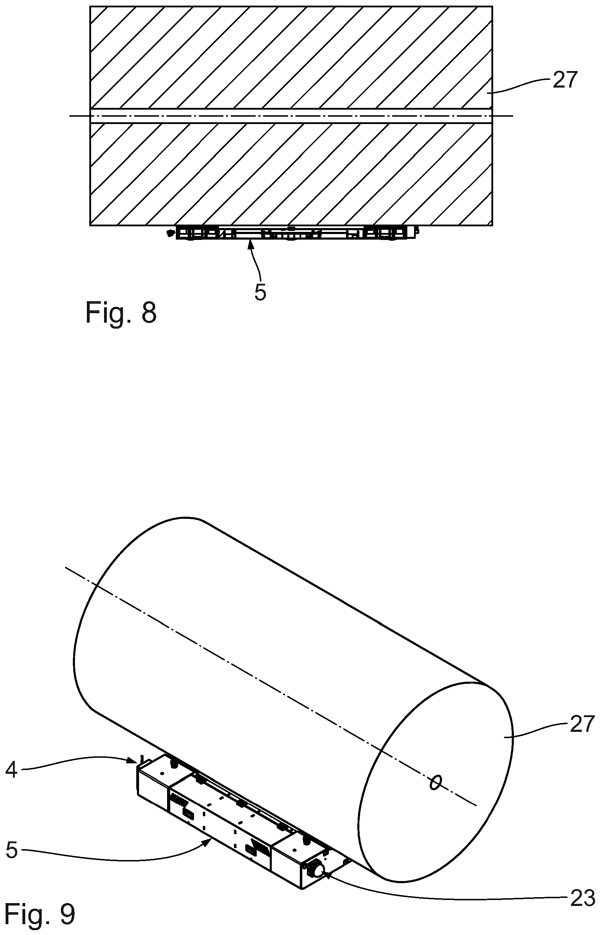

- Fig. 8: einen Längsschnitt durch die in Fig. 6 gezeigte Anordnung aus Transportwagen und Materialrolle entsprechend der Schnittlinie VIII-VIII in Fig. 6,
- Fig. 9: eine perspektivische Ansicht der in Fig. 6 bis 8 gezeigten Anordnung aus Transportwagen und Materialrolle,

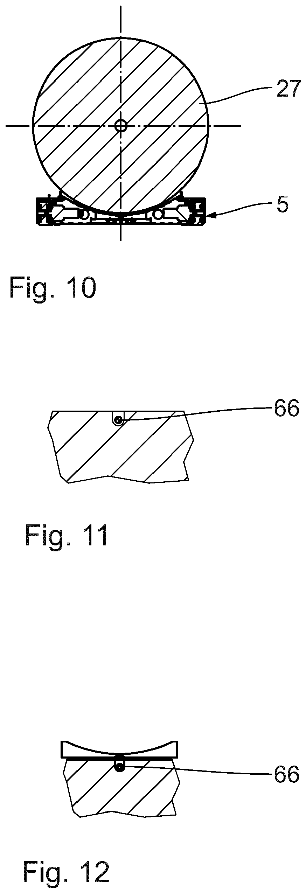

- Fig. 10: einen Querschnitt durch die in Fig. 6 bis 9 gezeigte Anordnung aus Transportwagen und Materialrolle,
- Fig. 11: eine in einem Untergrund angeordnete Energieversorgungsspule,
- Fig. 12: eine Ansicht, die die in Fig. 11 gezeigte Energieversorgungsspule und einen darüber sich befindenden Transportwagen veranschaulicht,

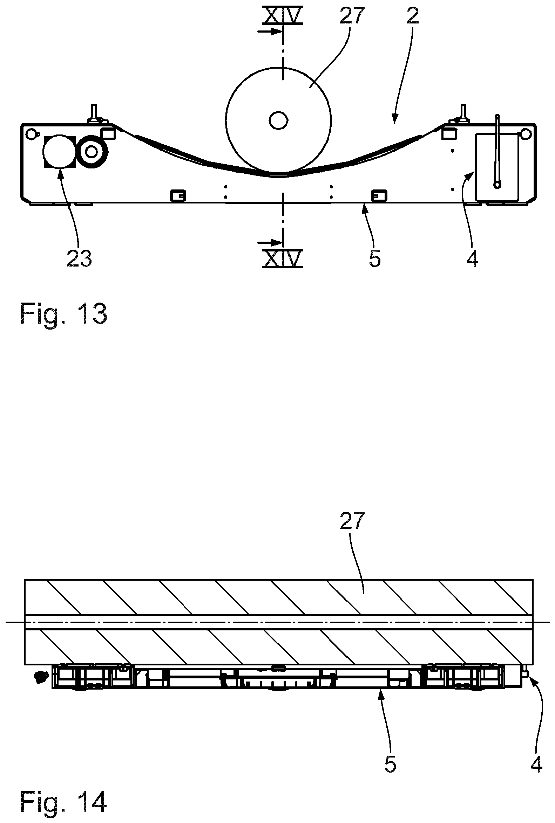

- Fig. 13: eine weitere Anordnung aus einem erfindungsgemäßen veranschaulichten Transportwagen und einer Materialrolle, wobei die Materialrolle im Vergleich mit Fig. 6 bis 10 im Außendurchmesser reduziert ist,
- Fig. 14: einen Längsschnitt durch die in Fig. 13 gezeigte erfindungsgemäße Anordnung aus Transportwagen und Materialrolle entsprechend der Schnittlinie XIV-XIV in Fig. 13, und
- Fig. 15: eine Teil-Draufsicht auf eine vereinfachte erfindungsgemäße Wellpappeanlage gemäß einer ersten Ausführungsform, in der auch Transportwagen und deren Verfahrwege mit dargestellt sind, und
- Fig. 16: eine Teil-Draufsicht auf eine vereinfachte erfindungsgemäße Wellpappeanlage gemäß einer zweiten Ausführungsform, in der auch Transportwagen und deren Verfahrwege mit dargestellt sind.

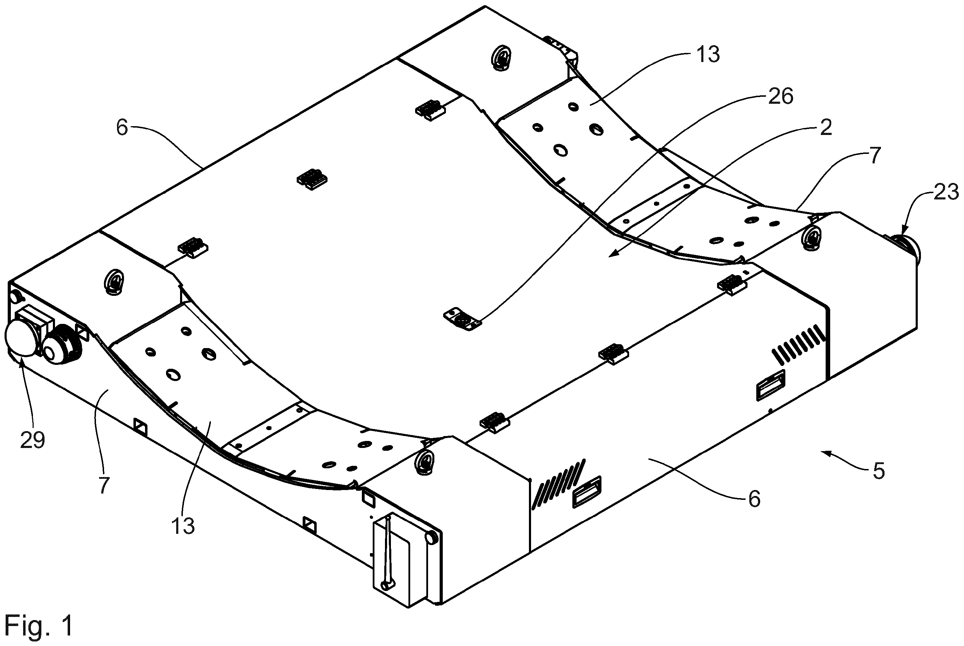

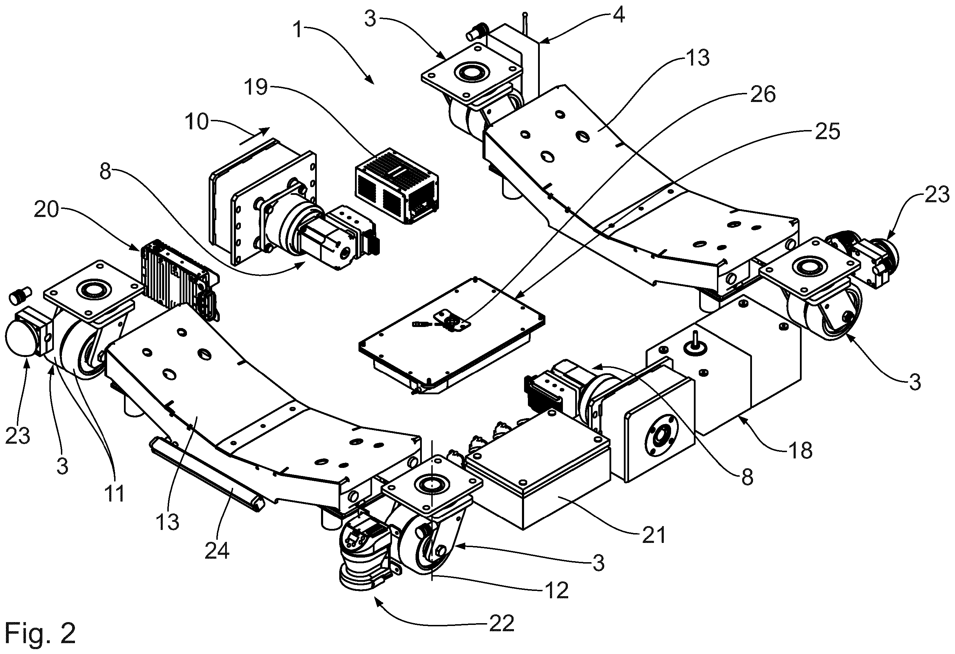

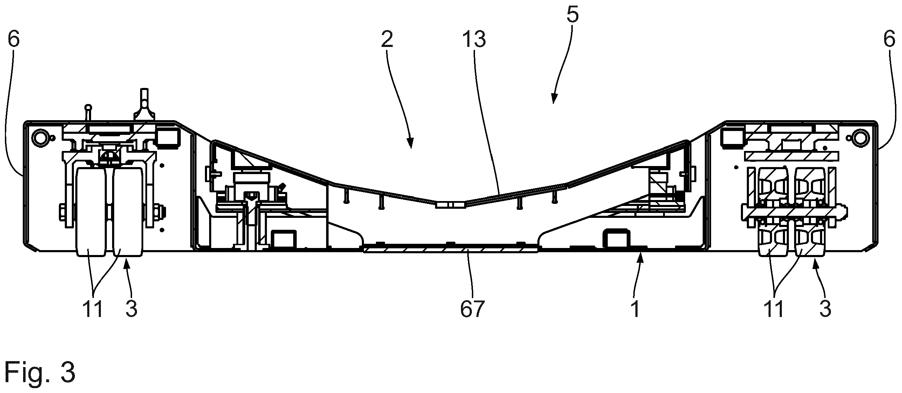

Zunächst bezugnehmend auf die Fig. 1 bis 5 wird der Aufbau eines Papierrollen-Transportwagens 5 beschrieben. Der Papierrollen-Transportwagen 5 hat ein starres Gestell 1, das rahmenartig bzw. chassisartig ist. Das Gestell 1 trägt eine Papierrollenaufnahme 2 für eine endliche aufgerollte Papierbahn und mehrere Radeinheiten 3 zum Verfahren des Papierrollen-Transportwagens 5 auf einem Untergrund sowie eine Kommunikationseinrichtung 4.

In Abhängigkeit von über die Kommunikationseinrichtung 4 empfangener Signale bzw. Informationen ist der Papierrollen-Transportwagen 5 in Bewegung versetzbar. Ferner ist so beispielsweise dessen Geschwindigkeit vorgebbar. Dem Papierrollen-Transportwagen 5 sind entsprechend auch Weg- bzw. Zielinformationen übermittelbar. Der Papierrollen-Transportwagen 5 ist gerade oder kurvenförmig verfahrbar.

Das Gestell 1 hat zwei Längsseiten 6 und zwei Querseiten 7. Die Längsseiten 6 verlaufen parallel zueinander. Sie erstrecken sich parallel zu der Papierrollenaufnahme 2. Auch die Querseiten 7 erstrecken sich parallel zueinander. Die Längsseiten 6 und die Querseiten 7 verlaufen rechtwinklig zueinander.

Benachbart zu jeder Längsseite 6 ist an dem Gestell 1 ein eigenständiger Verfahrantrieb 8 angeordnet, der einen eine Antriebswelle aufweisenden Elektromotor umfasst.

Mit jedem Verfahrantrieb 8 bzw. dessen Antriebswelle steht ein Antriebslaufrad 9 in Antriebsverbindung, das drehbar bzw. drehantreibbar gelagert ist. Die Drehachsen der Antriebslaufräder 9 fluchten miteinander. Sie erstrecken sich senkrecht zu den Längsseiten 6. Die Antriebslaufräder 9 befinden sich in Bezug auf eine Längsrichtung 10 des Papierrollen-Transportwagens 5 in der Mitte. Sie sind unlenkbar.

Ferner ist an jedem Eckbereich des Gestells 1 an dem Gestell 1 eine Lenkradeinheit 11 angeordnet, die jeweils ein Zwillingsrad umfasst. Die Zwillingräder sind drehbar gelagert. Jede Lenkradeinheit 11 ist um eine vertikale Lenkachse 12 selbstständig auslenkbar. Die Lenkradeinheiten 11 sind frei auslenkbar, insbesondere um 360°. Die Lenkachsen 12 verlaufen parallel zueinander.

Die Papierrollenaufnahme 2 ist durch zwei beabstandet zueinander angeordnete Rinnenteile 13 gebildet, die jeweils auf dem Gestell 1 vertikal verlagerbar gelagert sind. Die Rinnenteile 13 erstrecken sich benachbart zu den Querseiten 7 zwischen den Längsseiten 6. Ihre tiefste Aufnahmestelle befindet sich mittig zwischen den Längsseiten 6. Sie sind symmetrisch ausgebildet. Die Rinnenteile 13 haben benachbart zu den Längsseiten 6 des Gestells 1 ihre höchsten Stellen. Sie sind benachbart zu den Querseiten 7 des Gestells 1 bzw. in Längsrichtung offen.

Die Papierrollenaufnahme 2 trägt unten mindestens eine horizontal verlaufende Abstützplatte 67.

Zwischen dem Gestell 1 und dem über diesem angeordneten Rinnenteil 13 sind Federeinheiten 14 angeordnet. Jede Federeinheit 14 ist durch eine Schraubendruckfeder gebildet, die vorgespannt und komprimierbar ist. Schraubenachsen 15 der Federeinheiten 14 verlaufen vertikal. Die Federeinheiten 14 stützen sich oben jeweils auf dem Gestell 1 ab. Ferner liegt auf mindestens zwei Federeinheiten 14 oben jeweils eines der Rinnenteile 13. Der maximale Federweg der Federeinheiten 14 liegt günstigerweise jeweils zwischen 3 mm und 10 mm, bevorzugter zwischen 5 mm und 8 mm.

Zwischen dem Gestell 1 und jedem Rinnenteil 13 sind Führungen 16 angeordnet, die eine vertikale Verlagerung von jedem Rinnenteil 13 unter Veränderung der Länge der zugehörigen Federeinheiten 14 erlauben, aber eine horizontale Verlagerung von jedem Rinnenteil 13 gegenüber dem Gestell 1 verhindern bzw. reduzieren. Jede Führung 16 ist durch einen Führungsstift 17 gebildet, der sich vertikal erstreckt und in eine zugeordnete Federeinheit 14 von oben eingreift.

An dem Gestell 1 ist außerdem ein Akkumulator 18 angeordnet. Bei dem Akkumulator 18 handelt es sich um einen wiederaufladbaren Speicher für elektrische Energie für die Verfahrantriebe 8.

Ferner ist an dem Gestell 1 ein Spannungsregler 19 angeordnet. Der Spannungsregler 19 ist an den Akkumulator 18 elektrisch angeschlossen. Er ist im Stande, Schwankungen der elektrischen Eingangsspannung des Akkumulators 18 auszugleichen. Der Spannungsregler 19 ist günstigerweise elektronischer Art. Er steht außerdem mit den beiden Verfahrantrieben 8 in elektrischer Verbindung.

An dem Gestell 1 ist des Weiteren eine Steuerung 20 angeordnet, die im Stande ist, die beiden Verfahrantriebe 8 unabhängig voneinander anzusteuern. Die Steuerung 20 steht außerdem mit der Kommunikationseinrichtung 4 in Signalverbindung.

Ferner ist an dem Gestell 1 ein Klemmkasten 21 angeordnet. Über den Klemmkasten 21 sind die elektronischen bzw. elektrischen Komponenten des Papierrollen-Transportwagens 5 elektrisch miteinander verbunden.

An dem Gestell 1 ist des Weiteren in einem vorderen Eckbereich eine Sicherheitseinrichtung 22 angeordnet, die als Scanner, insbesondere Laserscanner, ausgebildet ist. Die Sicherheitseinrichtung 22 steht mit der Steuerung 20 in Signalverbindung. Sie ist im Stande, den Papierrollen-Transportwagen 5 bei erkannter Gefahr zu stoppen.

Ferner ist endseitig an dem Papierrollen-Transportwagen 5 jeweils eine Notaus-Einrichtung 23 angeordnet. Jede Notaus-Einrichtung 23 ist bei Betätigung im Stande, die Verfahrantriebe 8 sofort auszuschalten bzw. die Stromzufuhr zu diesen sofort zu unterbrechen.

Benachbart zu der vorderen Querseite 7 ist an dem Gestell 1 vorne mittig eine Verfahrweg-Erkennungseinrichtung 24 angeordnet, die als Sensor ausgeführt ist. Die Verfahrweg-Erkennungseinrichtung 24 ist länglich ausgebildet und erstreckt sich horizontal. Sie verläuft senkrecht zu der Längsrichtung 10 des Papierrollen-Transportwagens 5. Sie ist im Stande, einen vorgegebenen Verfahrweg zu erkennen.

Das Gestell 1 hält außerdem eine induktive Energieübertragungseinrichtung 25. Die Energieübertragungseinrichtung 25 steht mit dem Akkumulator 18 in elektrischer Verbindung. Sie ist in einem zentralen Bereich des Papierrollen-Transportwagens 5 angeordnet.

Die Energieübertragungseinrichtung 25 trägt oben einen Papierrollen-Erkennungssensor 26. Der Papierrollen-Erkennungssensor 26 ist im Stande zu erkennen, ob der Papierrollen-Transportwagen 5 beladen oder unbeladen ist. Er befindet sich in der Papierrollenaufnahme 2.

Der Papierrollen-Transportwagen 5 ist durch Bestromung des mindestens einen Verfahrantriebs 8 verfahrbar. Die notwendige elektrische Energie stammt aus dem Akkumulator 18. Die Verfahrantriebe 8 empfangen indirekt entsprechende Fahrsignale über die Verfahrweg-Erkennungseinrichtung 24 und/oder über die Kommunikationseinrichtung 4.

Wenn die beiden Antriebslaufräder 9 gegensinnig betragsgleich angetrieben werden, so dreht sich der Papierrollen-Transportwagen 5 auf der Stelle. Wenn das eine Antriebslaufrad 9 stärker als das andere Antriebslaufrad 9 angetrieben wird, so macht der Papierrollen-Transportwagen 5 eine Kurvenfahrt. Die Lenkradeinheiten 11 verstellen sich dabei automatisch um die jeweilige Lenkachse 12. Wenn die beiden Antriebslaufräder 9 identisch und gleichsinnig angetrieben werden, so fährt der Papierrollen-Transportwagen 5 gerade. Die Lenkradeinheiten 11 stellen sich automatisch entsprechend auf eine Geradeausfahrt ein.

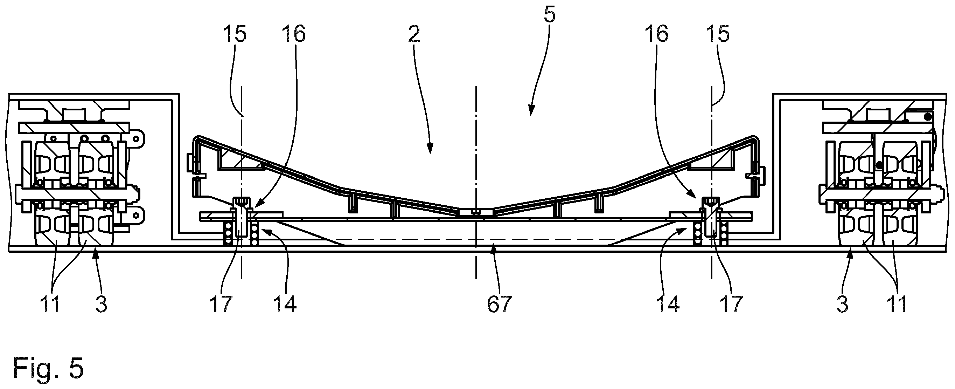

Wenn der Papierrollen-Transportwagen 5 mit einer Papierrolle 27 beladen wird, werden bei Überlast die Rinnenteile 13 gegen die Federkraft der Federeinheiten 14 und gegenüber dem Gestell 1 geführt nach unten verlagert (Fig. 5). Die mindestens eine Abstützplatte 67 kommt dabei mit dem Untergrund zur Anlage. Der Papierrollen-Transportwagen 5 wird so geschützt.

Die vorgespannten Federeinheiten 14 halten die Papierrolle 27 bzw. die Rinnenteile 13 auch bei maximalem Papierrollengewicht, wie fünf Tonnen, noch in Position. Bei einer Überlast, dynamisch oder statisch, geben die Federeinheiten 14 nach bis die Papierrollenaufnahme 2 soweit einfedert, dass die mindestens eine Abstützplatte 67 auf dem Untergrund aufschlägt und so die Überlast direkt in den Untergrund ableitet ohne dabei den Papierrollen-Transportwagen 5 zu überlasten.

Die in der Papierrollenaufnahme 2 angeordnete Papierrolle 27 liegt auf dem Papierrollen-Erkennungssensor 26, der so eine Beladung mit der Papierrolle 27 erkennt. Sie erstreckt sich horizontal.

Die Papierrolle 27 liegt auf den Rinnenteilen 13. Die Rinnenteile 13 liegen über einem Teilumfangsbereich der Papierrolle 27 an dieser unten und/oder seitlich an. Die Papierrolle 27 steht günstigerweise gleichmäßig gegenüber dem Papierrollen-Transportwagen 5 in der Längsrichtung 10 über.

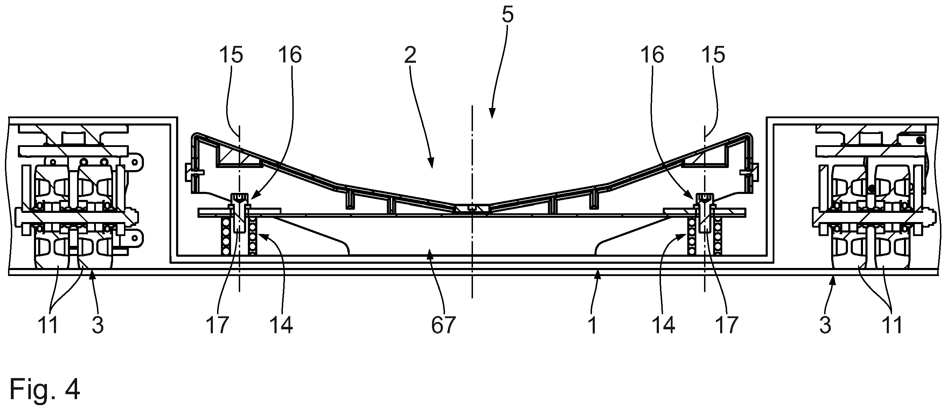

Bei Entladung der Papierrolle 27 federn die Federeinheiten 14, sofern aufgrund Überlast eingefedert, wieder aus und verlagern die Rinnenteile 13 geführt nach oben (Fig. 4).

Jede Abrolleinheit von jeder Spleißvorrichtung/Bahn-Abgabevorrichtung hat günstigerweise eine Abrollarmanordnung zum drehbaren Lagern der jeweiligen Papierrolle 27. Die jeweilige Abrollarmanordnung beschreibt vorzugsweise zumindest teilweise eine Kreisbogenbewegung, insbesondere beim Heben, was zu einer besonders präzisen Aufnahme der Papierrolle 27, auch bei unterschiedlichen Durchmessern, in der Papierrollenaufnahme 2 führt. Dies ergibt einen Versatz des Papierrollenzentrums gegenüber dem Dorn der jeweiligen Abrolleinheit.

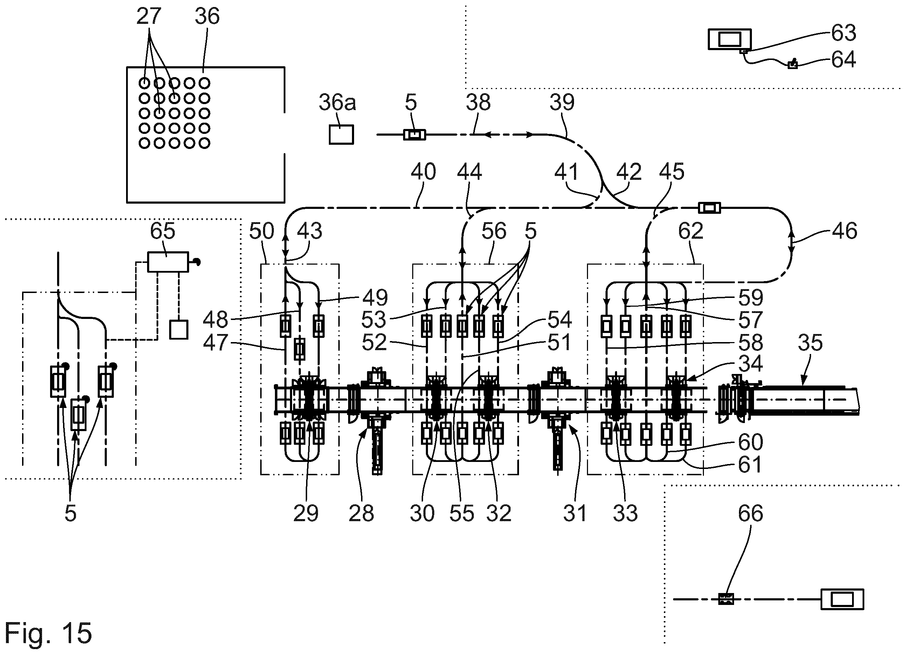

In einer Wellpappeanlage, die nachfolgend unter Bezugnahme auf Fig. 15 erläutert wird, kommen mehrere, vorzugsweise zwischen 15 und 25, der Papierrollen-Transportwagen 5 zum Einsatz. Sie werden eingesetzt, um Papierrollen 27 einer Wellpappe-Herstellungslinie der Wellpappeanlage zur Herstellung von Wellpappe zuzuführen und auch wieder abzutransportieren.

Die Wellpappe-Herstellungslinie erstreckt sich längs einer Wellpappe-Herstellungsrichtung. Sie umfasst eine erste Wellpappe-Herstellvorrichtung 28 zum Herstellen einer einseitig kaschierten ersten Wellpappebahn.

Der ersten Wellpappe-Herstellvorrichtung 28 sind eine erste Deckbahn-Spleißvorrichtung 29 und eine erste Zwischenbahn-Spleißvorrichtung 30 vorgeordnet. Die erste Deckbahn-Spleißvorrichtung 29 umfasst zum Abrollen einer endlichen ersten Deckbahn von einer ersten Deckbahnrolle eine erste Abrolleinheit und zum Abrollen einer endlichen zweiten Deckbahn von einer zweiten Deckbahnrolle eine zweite Abrolleinheit. Die endliche erste Deckbahn und zweite Deckbahn werden zum Bereitstellen einer endlosen ersten Deckbahn mittels einer Verbinde- und Schneideinheit der ersten Deckbahn-Spleißvorrichtung 29 miteinander verbunden.

Die erste Zwischenbahn-Spleißvorrichtung 30 ist entsprechend der ersten Deckbahn-Spleißvorrichtung 29 ausgebildet. Diese umfasst zum Abrollen einer endlichen ersten Zwischenbahn von einer ersten Zwischenbahnrolle eine dritte Abrolleinheit und zum Abrollen einer endlichen zweiten Zwischenbahn von einer zweiten Zwischenbahnrolle eine vierte Abrolleinheit. Die endliche erste Zwischenbahn und zweite Zwischenbahn werden zum Bereitstellen einer endlosen ersten Zwischenbahn mittels einer Verbinde- und Schneideinheit der ersten Zwischenbahn-Spleißvorrichtung 30 miteinander verbunden.

Die endlose erste Deckbahn und die endlose erste Zwischenbahn werden der ersten Wellpappe-Herstellvorrichtung 28 zugeführt.

Die erste Wellpappe-Herstellvorrichtung 28 umfasst zum Überzeugen einer eine Wellung aufweisenden, endlosen ersten Wellbahn aus der endlosen ersten Zwischenbahn eine erste Riffelwalzenanordnung mit einer ersten Riffelwalze und einer zweiten Riffelwalze. Die Riffelwalzen bilden zum Durchführen und Riffeln der endlosen ersten Zwischenbahn einen ersten Walzenspalt aus.

Zum Verbinden der endlosen ersten Deckbahn mit der endlosen gewellten ersten Zwischenbahn bzw. Wellbahn zu der einseitig kaschierten endlosen ersten Wellpappebahn weist die erste Wellpappe-Herstellvorrichtung 28 eine erste Leimauftragseinrichtung auf, die vorzugsweise eine Leimdosierwalze, einen Leimbehälter und eine Leimauftragswalze umfasst. Zum Durchführen und Beleimen der endlosen ersten Wellbahn bildet die Leimauftragswalze mit der ersten Riffelwalze einen Spalt aus. Der sich in dem Leimbehälter befindende Leim wird über die Leimauftragswalze auf Spitzen der Wellung der endlosen ersten Wellbahn aufgetragen. Die Leimdosierwalze liegt gegen die Leimauftragswalze an und dient zum Ausbilden einer gleichmäßigen Leimschicht auf der Leimauftragswalze.

Die endlose erste Deckbahn wird anschließend mit der mit Leim aus dem Leimbehälter versehenen, endlosen ersten Wellbahn in der ersten Wellpappe-Herstellvorrichtung 28 zum Herstellen der einseitig kaschierten ersten Wellpappebahn zusammengefügt.

Zum Anpressen der endlosen ersten Deckbahn gegen die mit Leim versehene, endlose erste Wellbahn, die wiederum bereichsweise an der ersten Riffelwalze anliegt, hat die erste Wellpappe-Herstellvorrichtung 28 ein erstes Anpressmodul. Das erste Anpressmodul ist günstigerweise als Anpressbandmodul ausgeführt. Es ist oberhalb der ersten Riffelwalze angeordnet. Das erste Anpressmodul hat zwei erste Umlenkwalzen sowie ein endloses erstes Anpressband, das um die beiden ersten Umlenkwalzen geführt ist.

Die erste Riffelwalze greift in einen Raum zwischen den beiden ersten Umlenkwalzen des ersten Anpressmoduls bereichsweise von unten ein, wodurch das erste Anpressband durch die erste Riffelwalze umgelenkt wird. Das erste Anpressband drückt gegen die endlose erste Deckbahn, die wiederum gegen die mit Leim versehene, an der ersten Riffelwalze anliegende, endlose erste Wellbahn gepresst wird.

Zum Zwischenspeichern und Puffern der einseitig kaschierten, endlosen ersten Wellpappebahn wird diese über eine erste Hochtransporteinrichtung einer ersten Speichervorrichtung zugeführt, wo diese Schleifen ausbildet.

Ferner hat die Wellpappe-Herstellungslinie eine zweite Wellpappe-Herstellvorrichtung 31, die entsprechend der ersten Wellpappe-Herstellvorrichtung 28 ausgebildet ist.

Der zweiten Wellpappe-Herstellvorrichtung 31 sind eine zweite Deckbahn-Spleißvorrichtung 32 und eine zweite Zwischenbahn-Spleißvorrichtung 33 vorgeordnet, die entsprechend der ersten Deckbahn-Spleißvorrichtung 29 bzw. der ersten Zwischenbahn-Spleißvorrichtung 30 ausgebildet sind.

Die zweite Deckbahn-Spleißvorrichtung 32 umfasst zum Abrollen einer endlichen dritten Deckbahn von einer dritten Deckbahnrolle eine fünfte Abrolleinheit und zum Abrollen einer endlichen vierten Deckbahn von einer vierten Deckbahnrolle eine sechste Abrolleinheit. Die endliche dritte Deckbahn und vierte Deckbahn werden zum Bereitstellen einer endlosen zweiten Deckbahn mittels einer Verbinde- und Schneideinheit der zweiten Deckbahn-Spleißvorrichtung 32 miteinander verbunden.

Die zweite Zwischenbahn-Spleißvorrichtung 33 umfasst zum Abrollen einer endlichen dritten Zwischenbahn von einer dritten Zwischenbahnrolle eine siebte Abrolleinheit und zum Abrollen einer endlichen vierten Zwischenbahn von einer vierten Zwischenbahnrolle eine achte Abrolleinheit. Die endliche dritte Zwischenbahn und vierte Zwischenbahn werden zum Bereitstellen einer endlosen zweiten Zwischenbahn mittels einer Verbinde- und Schneideinheit der zweiten Zwischenbahn-Spleißvorrichtung 33 miteinander verbunden.

Die zweite Wellpappe-Herstellvorrichtung 31 ist im Stande, eine einseitig kaschierte, endlose, zweite Wellpappebahn aus der endlosen zweiten Deckbahn und Zwischenbahn zu erzeugen.

Die einseitig kaschierte, zweite Wellpappebahn wird einer zweiten Speichervorrichtung zugeführt, wo diese Schleifen ausbildet.

Die Wellpappe-Herstellungslinie hat außerdem eine Kaschierbahn-Spleißvorrichtung 34, die zum Abrollen einer endlichen ersten Kaschierbahn von einer ersten Kaschierbahnrolle eine neunte Abrolleinheit und zum Abrollen einer endlichen zweiten Kaschierbahn von einer zweiten Kaschierbahnrolle eine zehnte Abrolleinheit umfasst. Die endliche erste Kaschierbahn und die endliche zweite Kaschierbahn werden zum Bereitstellen einer endlosen Kaschierbahn mittels einer Verbinde- und Schneideinheit der Kaschierbahn-Spleißvorrichtung 34 miteinander verbunden.

Stromabwärts zu den Speichervorrichtungen und der Kaschierbahn-Spleißvorrichtung 34 hat die Wellpappe-Herstellungslinie eine Vorheizvorrichtung, die drei übereinander angeordnete Vorheizwalzen umfasst. Den Vorheizvorrichtungen werden die einseitig kaschierten, endlosen Wellpappebahnen und die endlose Kaschierbahn zugeführt.

Stromabwärts zu der Vorheizvorrichtung hat die Wellpappe-Herstellungslinie ein Leimwerk mit Beleimungswalzen, die teilweise in ein jeweiliges Leimbad eingetaucht sind. An jeder Beleimungswalze liegt eine Leimdosierwalze an, um eine gleichmäßige Leimschicht auf der benachbarten Beleimungswalze auszubilden. Die einseitig kaschierte, erste Wellpappebahn befindet sich mit ihrer Wellbahn mit einer ersten Beleimungswalze in Kontakt, so dass die Wellung dieser Wellbahn mit Leim aus dem Leimbad versehen wird. Die einseitig kaschierte, zweite Wellpappebahn befindet sich mit ihrer Wellbahn mit einer zweiten Beleimungswalze in Kontakt, sodass die Wellung dieser Wellbahn mit Leim aus dem zugehörigen Leimbad versehen wird. Stromabwärts zu dem Leimwerk hat die Wellpappe-Herstellungslinie eine Verbindungsvorrichtung 35, die als Heiz-Andrückvorrichtung ausgebildet ist und einen horizontal verlaufenden Heiztisch umfasst. Benachbart zu dem Heiztisch ist ein um Führungswalzen geführter, endloser Andrückgurt angeordnet. Zwischen dem Andrückgurt und dem Heiztisch ist ein Andrückspalt ausgebildet, durch den die einseitig kaschierten Wellpappebahnen und die endlose Kaschierbahn unter Bildung der endlosen, hier fünflagigen, Wellpappebahn geführt sind.

Stromabwärts zu der Verbindungsvorrichtung 35 hat die Wellpappe-Herstellungslinie eine Kurz-Querschneidevorrichtung.

Stromabwärts zu der Kurz-Querschneidevorrichtung umfasst die Wellpappe-Herstellungslinie eine Längsschneide-/Rillvorrichtung.

Stromabwärts zu der Längsschneide-/Rillvorrichtung hat die Wellpappe-Herstellungslinie eine Querschneidevorrichtung, um aus der endlosen Wellpappebahn bzw. aus Teilbahnen derselben Bögen zu erzeugen.

Der Querschneidevorrichtung ist eine Förderbandeinrichtung nachgeordnet, um die Bögen weiter zu fördern. Der Förderbandeinrichtung ist eine Ablagevorrichtung nachgeordnet.

Benachbart zu der Wellpappe-Herstellungslinie befindet sich ein Papierrollenlager 36 der Wellpappeanlage, in der eine Vielzahl, günstigerweise unterschiedlicher, Papierrollen 27 für die Spleißvorrichtungen 29, 30, 32, 33, 34 bevorratet sind.

Benachbart zu dem Papierrollenlager 36 befindet sich eine Übergabestelle 36a, wo die Papierrollen 27 aus dem Papierrollenlager 36 dem jeweiligen Papierrollen-Transportwagen 5, beispielsweise händisch oder automatisiert, übergeben werden.

In Fig. 15 sind auch Verfahrwegmarkierungen 38 mit dargestellt, die die Verfahrwege der Papierrollen-Transportwagen 5 in der Wellpappeanlage anzeigen und vorgeben. Die Verfahrwegmarkierungen 38 sind sichtbar und als Anstrich auf einem die Wellpappeanlage tragenden ebenen Untergrund aufgebracht. Sie sind von den Verfahrweg-Erkennungseinrichtungen 24 der Papierrollen-Transportwagen 5 erkennbar. Die Papierrollen-Transportwagen 5 folgen im Normalbetrieb beim Fahren den Verfahrwegmarkierungen 38, die Kurven, Weichen, Kreuzungen und gerade Abschnitte umfassen. Die zentrale Steuereinrichtung 65 gibt vor, wie der Papierrollen-Transportwagen 5 bei Weichen, Kreuzungen oder dergleichen fahren soll. Die maximale Verfahrgeschwindigkeit der Papierrollen-Transportwagen 5 liegt vorzugsweise bei 0,4 m/s.

Wie Fig. 15 zeigt, schließt sich an die Übergabestelle 36a ein Zufuhr-Abführweg 39 an, wo die Papierrollen-Transportwagen 5 in gegensinnigen Richtungen im Betrieb der Wellpappeanlage verfahren. Der Zuführ-Abführweg 39 hat einen sich an die Übergabestelle 36a anschließenden geraden Abschnitt und endseitig einen Bogenabschnitt.

An den Bogenabschnitt des Zuführ-Abführwegs 39 schließt sich ein Verteilweg 40 an. Auf dem Verteilweg 40 fahren die Papierrollen-Transportwagen 5 im Betrieb der Wellpappeanlage in einander gegensinnigen Richtungen. Der Verteilweg 40 erstreckt sich parallel zu dem geraden Abschnitt des Zuführ-Abführwegs 39 und der Wellpappe-Herstellungslinie. Er verläuft zwischen dem geraden Abschnitt des Zuführ-Abführwegs 39 und der Wellpappe-Herstellungslinie. Der Zuführ-Abführweg 39 schließt sich beabstandet zu Enden des Verteilwegs 40 seitlich an den Verteilweg 40 an.

Zwischen dem Verteilweg 40 und dem Zuführ-Abführweg 39 befinden sich eine erste Weiche 41 und eine zweite Weiche 42. In Abhängigkeit der gewählten Weiche 41, 42 werden die Papierrollen-Transportwagen 5 entsprechend in den Verteilweg 40 geführt. Die Papierrollen-Transportwagen 5 sind so auch wieder von dem Verteilweg 40 über die jeweilige Weiche 41, 42 zurück auf den Zuführ-Abführweg 39 führbar.

An den Verteilweg 40 schließt sich endseitig ein erster Deckbahnweg 43 über einen 90°-Bogen an. An den Verteilweg 40 schließt sich über einen weiteren 90°-Bogen ein Zwischenbahn-Deckbahnweg 44 an, der sich parallel zu dem ersten Deckbahnweg 43 erstreckt. An den Verteilweg 40 schließt sich über einen weiteren 90°-Bogen ein Zwischenbahn-Kaschierbahnweg 45 an, der parallel zu dem Zwischenbahn-Deckbahnweg 44 verläuft. An den Verteilweg 40 schließt sich endseitig über einen weiteren 90°-Bogen ein Alternativweg 46 an. Der Zwischenbahn-Deckbahnweg 44 ist zwischen dem ersten Deckbahnweg 43 und dem Zwischenbahn-Kaschierbahnweg 45 angeordnet. Der Zwischenbahn-Kaschierbahnweg 45 ist zwischen dem Zwischenbahn-Deckbahnweg 44 und dem Alternativweg 46 angeordnet.

Der erste Deckbahnweg 43 und der Zwischenbahn-Deckbahnweg 44 sind über die erste Weiche 41 von dem Zuführ-Abführweg 39 aus erreichbar. Der Zwischenbahn-Kaschierbahnweg 45 und der Alternativweg 46 sind über die zweite Weiche 42 von dem Zuführ-Abführweg 39 aus erreichbar. Der Alternativweg 46 dient zur Verbesserung der Verfahrwege der Papierrollen-Transportwagen 5.

An den ersten Deckbahnweg 43 schließt sich ein Deckbahn-Rückführweg 47 an, der gerade verläuft und mit dem ersten Deckbahnweg 43 fluchtet. An den ersten Deckbahnweg 43 schließen sich über eine Weiche und einen Bogen ein erster Deckbahn-Zuführweg 48 und über eine weitere Weiche und einen weiteren Bogen ein zweiter Deckbahnweg-Zuführweg 49 an.

Der Deckbahn-Rückführweg 47, der erste Deckbahn-Zuführweg 48 und der zweite Deckbahn-Zuführweg 49 verlaufen hauptsächlich jeweils gerade, parallel zueinander und erstrecken sich jeweils senkrecht zu der Wellpappe-Herstellungslinie. Sie sind jeweils Einbahnwege und durchsetzen die Wellpappe-Herstellungslinie. Die Deckbahn-Zuführwege 48, 49 fluchten mit den Abrolleinheiten der ersten Deckbahn-Spleißvorrichtung 29.

Der Deckbahn-Rückführweg 47, der erste Deckbahn-Zuführweg 48 und der zweite Deckbahn-Zuführweg 49 befinden sich in einem ersten Laserscanner-Schutzbereich 50. Mittels Lichtvorhang und mitgeführtem Transponder werden beim Betreten des Laserscanner-Schutzbereichs 50 gefahrbringende Bewegungen von der zentralen Steuereinrichtung 65 gestoppt und auch wieder freigegeben, ohne dass eine Bedienperson die entsprechenden Stellen wieder freigeben muss.

An den Zwischenbahn-Deckbahnweg 44 schließt sich ein Zwischenbahn-Deckbahn-Rückführweg 51 an, der gerade verläuft und mit dem Zwischenbahn-Deckbahnweg 44 fluchtet. An den Zwischenbahn-Deckbahnweg 44 schließt sich über eine Weiche und einen Bogen ein erster Zwischenbahn-Zuführweg 52 an. Ferner schließt sich an den Zwischenbahn-Deckbahnweg 44 über eine weitere Weiche und einen weiteren Bogen ein zweiter Zwischenbahn-Zuführweg 53 an. Ferner schließt sich an den Zwischenbahn-Deckbahnweg 44 über eine weitere Weiche und einen weiteren Bogen ein dritter Deckbahn-Zuführweg 54 an. Ferner schließt sich an den Zwischenbahn-Deckbahnweg 44 über eine weitere Weiche und einen weiteren Bogen ein vierter Deckbahn-Zuführweg 55 an.

Der erste Zwischenbahn-Zuführweg 52, der zweite Zwischenbahn-Zuführweg 53, der dritte Deckbahn-Zuführweg 54 und der vierte Deckbahn-Zuführweg 55 sowie der Zwischenbahn-Deckbahn-Rückführweg 51 verlaufen jeweils hauptsächlich gerade, parallel zueinander und senkrecht zu der Wellpappe-Herstellungslinie. Sie sind jeweils Einbahnwege. Der erste Zwischenbahn-Zuführweg 52 und der zweite Zwischenbahn-Zuführweg 53 fluchten mit den Abrolleinheiten der ersten Zwischenbahn-Spleißvorrichtung 30. Der dritte Deckbahn-Zuführweg 54 und der vierte Deckbahn-Zuführweg 55 fluchten mit den Abrolleinheiten der zweiten Deckbahn-Spleißvorrichtung 32.

Der erste Zwischenbahn-Zuführweg 52, der zweite Zwischenbahn-Zuführweg 53, der dritte Deckbahn-Zuführweg 54 und der vierte Deckbahn-Zuführweg 55 sowie der Zwischenbahn-Deckbahn-Rückführweg 51 durchsetzen die Wellpappe-Herstellungslinie und befinden sich in einem zweiten Laserscanner-Schutzbereich 56. Mittels Lichtvorhang und mitgeführtem Transponder werden beim Betreten des zweiten Laserscanner-Schutzbereichs 56 gefahrbringende Bewegungen gestoppt und auch wieder freigegeben, ohne dass eine Bedienperson die entsprechenden Stellen wieder freigeben muss.

An den Zwischenbahn-Kaschierbahnweg 45 schließt sich ein Zwischenbahn-Kaschierbahn-Rückführweg 57 an, der gerade verläuft und mit dem Zwischenbahn-Kaschierbahnweg 45 fluchtet. An den Zwischenbahn-Kaschierbahnweg 45 schließt sich über eine Weiche und einen Bogen ein dritter Zwischenbahn-Zuführweg 58 an. An den Zwischenbahn-Kaschierbahnweg 45 schließt sich über eine Weiche und einen Bogen ein vierter Zwischenbahn-Zuführweg 59 an. An den Zwischenbahn-Kaschierbahnweg 45 schließt sich über eine Weiche und einen Bogen ein erster Kaschierbahn-Zuführweg 60 an. An den Zwischenbahn-Kaschierbahnweg 45 schließt sich über eine Weiche und einen Bogen ein zweiter Kaschierbahn-Zuführweg 61 an.

Der dritte Zwischenbahn-Zuführweg 58, der vierte Zwischenbahn-Zuführweg 59, der erste Kaschierbahn-Zuführweg 60 und der zweite Kaschierbahn-Zuführweg 61 sowie der Zwischenbahn-Kaschierbahn-Rückführweg 57 verlaufen jeweils hauptsächlich gerade, parallel zueinander und senkrecht zu der Wellpappe-Herstellungslinie. Der dritte Zwischenbahn-Zuführweg 58 und der vierte Zwischenbahn-Zuführweg 59 fluchten mit den Abrolleinheiten der zweiten Zwischenbahn-Spleißvorrichtung 33. Der erste Kaschierbahn-Zuführweg 60 und der zweite Kaschierbahn-Zuführweg 61 fluchten mit den Abrolleinheiten der Kaschierbahn-Spleißvorrichtung 34.

Der dritte Zwischenbahn-Zuführweg 58, der vierte Zwischenbahn-Zuführweg 59, der erste Kaschierbahn-Zuführweg 60 und der zweite Kaschierbahn-Zuführweg 61 sowie der Zwischenbahn-Kaschierbahn-Rückführweg 57 durchsetzen die Wellpappe-Herstellungslinie und befinden sich in einem dritten Laserscanner-Schutzbereich 62. Mittels Lichtvorhang und mitgeführtem Transponder werden beim Betreten des dritten Laserscanner-Schutzbereichs 62 gefahrbringende Bewegungen gestoppt und auch wieder freigegeben, ohne dass eine Bedienperson die entsprechenden Stellen wieder freigeben muss.

Nachfolgend wird der Transport der Papierrollen 27 über die Papierrollen-Transportwagen 5 in der Wellpappeanlage näher erläutert. Eine zentrale Steuereinrichtung 65 der Wellpappeanlage veranlasst die Abholung einer zu verwendenden Papierrolle 27 aus dem Papierrollenlager 36 für die Wellpappeproduktion in der Wellpappe-Herstellungslinie über einen Papierrollen-Transportwagen 5. Dazu fährt ein Papierrollen-Transportwagen 5 zu der Übergabestelle 36a, falls er sich dort noch nicht befindet. Die Papierrolle 27 wird dort auf den Papierrollen-Transportwagen 5 geladen. Sie liegt zentriert in der Papierrollenaufnahme 2.

Die zentrale Steuereinrichtung 65 schickt anschließend den beladenen Papierrollen-Transportwagen 5 zu der die Papierrolle 27 benötigenden Spleißvorrichtung 29, 30, 32, 33 bzw. 34.

Die Papierrollen-Transportwagen 5 können insbesondere durch gezielte Ansteuerung seitlich versetzt zu der Verfahrwegmarkierung 38 fahren. Die Papierrollen 27 sind so entsprechend ihrem Außendurchmesser exakt nach der zu bestückenden Spleißvorrichtung 29, 30, 32, 33 bzw. 34 bzw. nach der Übergabestelle 36a ausrichtbar. Alternativ ist der Papierrollen-Transportwagen 5 ausgebildet, die Papierrolle 27 axial gegenüber diesem bzw. gegenüber dem Gestell 1 zu verlagern.

Der Papierrollen-Transportwagen 5 fährt zur Bestückung einer Spleißvorrichtung 29, 30, 32, 33 bzw. 34 zunächst entlang des Zuführ-Abführwegs 39 in Richtung auf den Verteilweg 40.

Wenn die erste Deckbahn-Spleißvorrichtung 29 neu mit der Papierrolle 27 bestückt werden soll, so fährt der Papierrollen-Transportwagen 5 über die erste Weiche 41 auf den Verteilweg 40 und passiert den Zwischenbahn-Deckbahnweg 44. Dieser gelangt dann über den ersten Deckbahnweg 43 zu dem ersten Deckbahn-Zuführweg 48 bzw. dem zweiten Deckbahn-Zuführweg 49. In Abhängigkeit der erforderlichen Bestückung der ersten oder zweiten Abrolleinheit der ersten Deckbahn-Spleißvorrichtung 29 wird der entsprechende Zuführweg 48, 49 gewählt.

Wenn dieser Auftrag fertig abgearbeitet worden ist, so wird die Rest-Papierrolle 27, die vollständig leer sein oder noch Papier tragen kann, aus der entsprechenden Abrolleinheit weg von dem ersten Deckbahnweg 43 bewegt. Die Rest-Papierrolle 27 wird dann über den Deckbahn-Rückführweg 47, den ersten Deckbahnweg 43, den Verteilweg 40, die Weiche 41 und den Zuführ-Abführweg 39 zurück zu dem Papierrollenlager 36 gefahren.

Wenn die erste Zwischenbahn-Spleißvorrichtung 30 neu mit der Papierrolle 27 bestückt werden soll, so fährt der Papierrollen-Transportwagen 5 über die erste Weiche 41 und den Verteilweg 40 in den Zwischenbahn-Deckbahnweg 44. In Abhängigkeit der erforderlichen Bestückung der dritten oder vierten Abrolleinheit der ersten Zwischenbahn-Spleißvorrichtung 30 wird der entsprechende Zuführweg 52, 53 gewählt.

Wenn dieser Auftrag fertig abgearbeitet worden ist, so wird die Rest-Papierrolle 27, die vollständig leer sein oder noch Papier tragen kann, aus der entsprechenden Abrolleinheit weg von dem ersten Zwischenbahn-Deckbahnweg 44 bewegt. Die Rest-Papierrolle 27 wird dann über den Zwischenbahn-Deckbahn-Rückführweg 51, den ersten Zwischenbahn-Deckbahnweg 44 , den Verteilweg 40, die Weiche 41 und den Zuführ-Abführweg 39 zurück zu dem Papierrollenlager 36 gefahren.

Wenn die zweite Deckbahn-Spleißvorrichtung 32 neu mit der Papierrolle 27 bestückt werden soll, so fährt der Papierrollen-Transportwagen 5 über die erste Weiche 41 und den Verteilweg 40 in den Zwischenbahn-Deckbahnweg 44. In Abhängigkeit der erforderlichen Bestückung der fünften oder sechsten Abrolleinheit der zweiten Deckbahn-Spleißvorrichtung 29 wird der entsprechende Zuführweg 54, 55 gewählt.

Wenn dieser Auftrag fertig abgearbeitet worden ist, so wird die Rest-Papierrolle 27, die vollständig leer sein oder noch Papier tragen kann, aus der entsprechenden Abrolleinheit weg von dem Zwischenbahn-Deckbahnweg 44 bewegt. Die Rest-Papierrolle 27 wird dann über den Zwischenbahn-Deckbahn-Rückführweg 51, den Zwischenbahn-Deckbahnweg 44, den Verteilweg 40, die Weiche 41 und den Zuführ-Abführweg 39 zurück zu dem Papierrollenlager 36 gefahren.

Wenn die zweite Zwischenbahn-Spleißvorrichtung 33 neu mit der Papierrolle 27 bestückt werden soll, so fährt der Papierrollen-Transportwagen 5 über die zweite Weiche 42 und den Verteilweg 40 in den Zwischenbahn-Kaschierbahnweg 45. In Abhängigkeit der erforderlichen Bestückung der siebten oder achten Abrolleinheit der zweiten Zwischenbahn-Spleißvorrichtung 33 wird der entsprechende Zuführweg 58, 59 gewählt.

Wenn dieser Auftrag fertig abgearbeitet worden ist, so wird die Rest-Papierrolle 27, die vollständig leer sein oder noch Papier tragen kann, aus der entsprechenden Abrolleinheit weg von dem Zwischenbahn-Kaschierbahnweg 45 bewegt. Die Rest-Papierrolle 27 wird dann über den Zwischenbahn-Kaschierbahn-Rückführweg 57, den Zwischenbahn-Kaschierbahnweg 45, den Verteilweg 40, die zweite Weiche 42 und den Zuführ-Abführweg 39 zurück zu dem Papierrollenlager 36 gefahren.

Wenn die Kaschierbahn-Spleißvorrichtung 34 neu mit der Papierrolle 27 bestückt werden soll, so fährt der Papierrollen-Transportwagen 5 über die zweite Weiche 42 und den Verteilweg 40 in den Zwischenbahn-Kaschierbahnweg 45. In Abhängigkeit der erforderlichen Bestückung der neunten oder zehnten Abrolleinheit der Kaschierbahn-Spleißvorrichtung 34 wird der entsprechende Zuführweg 60, 61 gewählt.

Wenn dieser Auftrag fertig abgearbeitet worden ist, so wird die Rest-Papierrolle 27, die vollständig leer sein oder noch Papier tragen kann, aus der entsprechenden Abrolleinheit weg von dem Zwischenbahn-Kaschierbahnweg 45 bewegt. Die Rest-Papierrolle 27 wird dann über den Zwischenbahn-Kaschierbahn-Rückführweg 57, den Zwischenbahn-Kaschierbahnweg 45, den Verteilweg 40, die zweite Weiche 42 und den Zuführ-Abführweg 39 zurück zu dem Papierrollenlager 36 gefahren.

Die Papierrollen-Transportwagen 5 verfahren sicher auf ihrem Verfahrweg, der durch die einzelnen Wege gebildet ist. Dabei werden sie in Aufladezonen aufgeladen, die durch Spulen 66 im Untergrund entlang des Verfahrswegs gebildet sind. Die Spulen 66 sind vorzugsweise mittig bezüglich der Verfahrwegmarkierung verlegt und erstrecken sich über einen Großteil des Verfahrwegs. Die elektrische Energie der Spulen 66 wird auf die Papierrollen-Transportwagen 5 über deren Energieübertragungseinrichtung 25 übertragen. Die Aufladezonen fallen günstigerweise mit Wartezonen zusammen.

Durch die Papierrollen-Transportwagen 5 ist in der Wellpappeanlage ein Kreislauf geschaffen, der insbesondere durch den Antransport der Papierrollen 27 und den Abtransport der Rest-Papierrollen 27 gebildet ist. Der Antransport der Papierrollen 27 und/oder der Abtransport der Rest-Papierrollen 27 erfolgt jeweils zumindest teilweise, bevorzugter zumindest größtenteils, im Einbahnstraßenbetrieb beziehungsweise unidirektional. Der Abtransport bzw. Rücktransport der Rest-Papierrollen 27 erfolgt zumindest teilweise, bevorzugter zumindest größtenteils, auf einem gesonderten Weg.

Der Zuführ-Abführweg 39 wird sowohl für die Zuführung als auch für die Abführung der Papierrollen-Transportwagen 5 in Bezug auf das Papierrollenlager 36 genutzt, unabhängig davon für welche Spleißvorrichtung 29, 32, 30, 33, 34 die Papierrollen-Transportwagen 5 vorgesehen sind bzw. von welcher diese kommen.

Auch der Verteilweg 40 wird zumindest teilweise von sämtlichen Papierrollen-Transportwagen 5 genutzt. Die Papierrollen-Transportwagen 5 nutzen diesen zumindest teilweise, um zu der geplanten Spleißvorrichtung 29, 32, 30, 33, 34 zu kommen und/oder von dieser bzw. zu dem Zuführ-Abführweg 39 zurückzukommen.

Insbesondere sind bei der Wellpappeanlage mehrere, bevorzugter alle, der für einen Auftrag zu verlagernden Papierrollen 27 mit den Papierrollen-Transportwagen 5 parallel bzw. gleichzeitig verlagerbar, was sehr wirtschaftlich ist und zu schnellen Papierrollen-Wechseln führt. Der Verfahrweg der Papierrollen-Transportwagen 5 ist gerichtet.

Es ist von Vorteil, wenn sich die Papierrollen-Transportwagen 5 gemäß einer alternativen Ausführungsform nur in Bewegung versetzen, wenn über Induktion ein Schalter am Papierrollen-Transportwagen 5 mit Energie versorgt wird. Ohne Energie aus den Spulen 66 bremst der Papierrollen-Transportwagen 5 kontrolliert bis zum Stillstand.

Die Sicherheitseinrichtung 22 der Papierrollen-Transportwagen 5 verhindert Kollisionen.

Es ist zweckmäßig, wenn die jeweilige Position des Papierrollen-Transportwagens 5, beispielsweise durch Sensoren, bestimmbar ist. Günstigerweise sind durch Kodierungen entlang des Verfahrwegs genaue Positionen des jeweiligen Papierrollen-Transportwagens 5 bestimmbar.

Jeder Papierrollen-Transportwagen 5 ist auch manuell steuerbar. Dazu hat jeder Papierrollen-Transportwagen 5 eine Hilfs-Steuereinrichtung 63 zur Verbindung mit einer externen tragbaren Hilfs-Steuerung 64.

Alternativ ist eine Wellpappe-Herstellungslinie zur Bildung einer dreilagigen oder siebenlagigen Wellpappebahn vorgesehen.

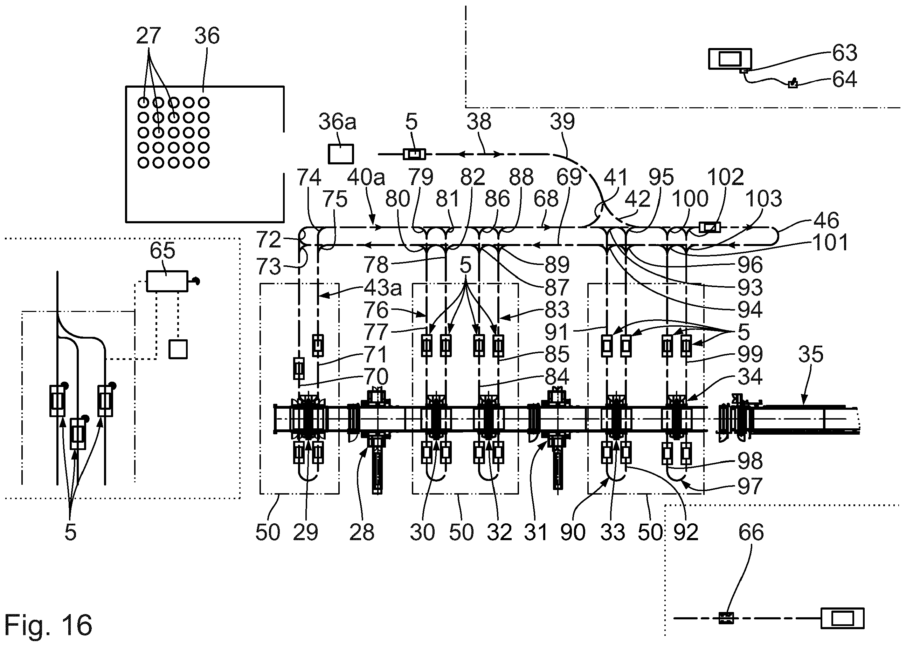

Nachfolgend wird unter Bezugnahme auf Fig. 16 eine zweite Ausführungsform einer Wellpappeanlage beschrieben. Identische Teile bzw. Elemente erhalten dieselben Bezugszeichen wie bei der ersten Ausführungsform, auf deren Beschreibung hiermit explizit verwiesen wird. Konstruktiv unterschiedliche, jedoch funktionell gleichartige Teile erhalten dieselben Bezugszeichen mit einem nachgeordneten "a".

Im Vergleich mit der ersten Ausführungsform ist bei der Wellpappeanlage gemäß Fig. 16 der Verteilweg 40a als Einbahnstraße und Kreislauf ausgeführt. Der Verteilweg 40a, der somit endlos ist, umfasst ein sich an die erste Weiche 41 und zweite Weiche 42 anschließenden im Wesentlichen geraden ersten Verteilwegabschnitt 68 und einen zweiten Verteilwegabschnitt 69, der parallel zu dem ersten Verteilwegabschnitt 68 verläuft. Der erste und zweite Verteilwegabschnitt 68, 69 erstrecken sich parallel zu dem geraden Abschnitt des Zuführ-Abführwegs 39 und der Wellpappe-Herstellungslinie und sind miteinander verbunden.

Auf dem ersten Verteilwegabschnitt 68 werden die Papierrollen-Transportwagen 5 im Betrieb der Wellpappeanlage gegebenenfalls in einer ersten Richtung verfahren, während die Papierrollen-Transportwagen 5 auf dem zweiten Verteilwegabschnitt 69 in einer zweiten, zu der ersten Richtung gegensinnigen Richtung verfahren werden.

An den Verteilweg 40a schließt sich ein erster Deckbahnweg 43a an. An den ersten Verteilwegabschnitt 68 und zweiten Verteilwegabschnitt 69 schließt sich der erste Deckbahnweg 43a an, der quasi endlos ist und einen ersten Deckbahnwegabschnitt 70 und einen zweiten Deckbahnwegabschnitt 71 umfasst. Die Deckbahnwegabschnitte 70, 71 erstrecken sich parallel zueinander und fluchten mit den Abrolleinheiten der ersten Deckbahn-Spleißvorrichtung 29. Der erste Deckbahnwegabschnitt 70 schließt sich über ein Anschlussstück 72 an den ersten Verteilwegabschnitt 68 und über einen Bogen 73 an den zweiten Verteilwegabschnitt 69 an. Der zweite Deckbahnwegabschnitt 71 schließt sich über einen Bogen 74 an den ersten Verteilwegabschnitt 68 und über einen Bogen 75 an den zweiten Verteilwegabschnitt 69 an. Der erste und zweite Deckbahnwegabschnitt 70, 71 durchsetzen die Wellpappe-Herstellungslinie bei der jeweiligen Abrolleinheit und sind jenseits der Wellpappe-Herstellungslinie miteinander verbunden.

Die Papierrollen-Transportwagen 5 sind sowohl auf dem ersten Deckbahnwegabschnitt 70 als auch auf dem zweiten Deckbahnwegabschnitt 71 in gegensinnigen Richtungen zur Bestückung der ersten Deckbahn-Spleißvorrichtung 29 und Entfernung von Rest-Papierrollen 27 verfahrbar. Ein umlaufender Transport der Papierrollen-Transportwagen 5 in einer Richtung zur Bestückung der ersten Deckbahn-Spleißvorrichtung 29 und Entfernung einer Rest-Papierrolle 27 entlang des ersten Deckbahnwegs 43a ist auch möglich.

An den Verteilweg 40a schließt sich ein erster Zwischenbahnweg 76 an. An den ersten Verteilwegabschnitt 68 und zweiten Verteilwegabschnitt 69 schließt sich der erste Zwischenbahnweg 76 an, der quasi endlos ist und einen ersten Zwischenbahnwegabschnitt 77 und einen zweiten Zwischenbahnwegabschnitt 78 umfasst. Die Zwischenbahnwegabschnitte 77, 78 erstrecken sich parallel zueinander und zu den Deckbahnwegabschnitten 70, 71. Sie fluchten mit den Abrolleinheiten der ersten Zwischenbahn-Spleißvorrichtung 30. Der erste Zwischenbahnwegabschnitt 77 ist über einen Doppelbogen 79 an den ersten Verteilwegabschnitt 68 und einen Doppelbogen 80 an den zweiten Verteilwegabschnitt 69 angeschlossen. Der zweite Zwischenbahnwegabschnitt 78 ist über einen Doppelbogen 81 an den ersten Verteilwegabschnitt 68 und über einen zweiten Doppelbogen 82 an den zweiten Verteilwegabschnitt 69 angeschlossen. Der erste und zweite Zwischenbahnwegabschnitt 77, 78 durchsetzen die Wellpappe-Herstellungslinie bei der jeweiligen Abrolleinheit und sind jenseits der Wellpappe-Herstellungslinie miteinander verbunden.

Die Papierrollen-Transportwagen 5 sind sowohl auf dem ersten Zwischenbahnwegabschnitt 77 als auch auf dem zweiten Zwischenbahnwegabschnitt 78 in gegensinnigen Richtungen zur Bestückung der ersten Zwischenbahn-Spleißvorrichtung 30 und Entfernung von Rest-Papierrollen 27 verfahrbar. Ein umlaufender Transport der Papierrollen-Transportwagen 5 in einer Richtung zur Bestückung der ersten Zwischenbahn-Spleißvorrichtung 30 und Entfernung einer Rest-Papierrolle 27 entlang des ersten Zwischenbahnwegs 76 ist auch möglich.

An Verteilweg 40a schließt sich ein zweiter Deckbahnweg 83 an. An den ersten Verteilwegabschnitt 68 und den zweiten Verteilwegabschnitt 69 schließt sich der zweite Deckbahnweg 83 an, der quasi endlos ist und einen ersten Deckbahnwegabschnitt 84 und einen zweiten Deckbahnwegabschnitt 85 umfasst. Die Deckbahnwegabschnitte 84, 85 erstrecken sich parallel zueinander und zu den Deckbahnwegabschnitten 70, 71. Sie fluchten mit den Abrolleinheiten der zweiten Deckbahn-Spleißvorrichtung 32. Der erste Deckbahnwegabschnitt 84 schließt sich über einen Doppelbogen 86 an den ersten Verteilwegabschnitt 68 und über einen Doppelbogen 87 an den zweiten Verteilwegabschnitt 69 an. Der zweite Deckbahnwegabschnitt 85 schließt sich über einen Doppelbogen 88 an den ersten Verteilwegabschnitt 68 und über einen Doppelbogen 89 an den zweiten Verteilwegabschnitt 69 an. Der erste und zweite Deckbahnwegabschnitt 84, 85 durchsetzen die Wellpappe-Herstellungslinie bei der jeweiligen Abrolleinheit und sind jenseits der Wellpappe-Herstellungslinie miteinander verbunden.

Die Papierrollen-Transportwagen 5 sind sowohl auf dem ersten Deckbahnwegabschnitt 84 als auch auf dem zweiten Deckbahnwegabschnitt 85 in gegensinnigen Richtungen zur Bestückung der zweiten Deckbahn-Spleißvorrichtung 32 und Entfernung von Rest-Papierrollen 27 verfahrbar. Ein umlaufender Transport der Papierrollen-Transportwagen 5 in einer Richtung zur Bestückung der zweiten Deckbahn-Spleißvorrichtung 32 und Entfernung einer Rest-Papierrolle 27 entlang des zweiten Deckbahnwegs 83 ist auch möglich.

An den Verteilweg 40a schließt sich ein zweiter Zwischenbahnweg 90 an. An den ersten Verteilwegabschnitt 68 und zweiten Verteilwegabschnitt 69 schließt sich der zweite Zwischenbahnweg 90 an, der quasi endlos ist und einen ersten Zwischenbahnwegabschnitt 91 und einen zweiten Zwischenbahnwegabschnitt 92 umfasst. Die Zwischenbahnwegabschnitte 91, 92 erstrecken sich parallel zueinander und zu den Deckbahnwegabschnitten 70, 71. Sie fluchten mit den Abrolleinheiten der zweiten Zwischenbahn-Spleißvorrichtung 33. Der erste Zwischenbahnwegabschnitt 91 schließt sich über einen Doppelbogen 93 an den ersten Verteilwegabschnitt 68 und über einen Doppelbogen 94 an den zweiten Verteilwegabschnitt 69 an. Der zweite Zwischenbahnwegabschnitt 92 schließt sich über einen Doppelbogen 95 an den ersten Verteilwegabschnitt 68 und über einen Doppelbogen 96 an den zweiten Verteilwegabschnitt 69 an. Der erste und zweite Zwischenbahnwegabschnitt 91, 92 durchsetzen die Wellpappe-Herstellungslinie bei der jeweiligen Abrolleinheit und sind jenseits der Wellpappe-Herstellungslinie miteinander verbunden.

Die Papierrollen-Transportwagen 5 sind sowohl auf dem ersten Zwischenbahnwegabschnitt 91 als auch auf dem zweiten Zwischenbahnwegabschnitt 92 in gegensinnigen Richtungen zur Bestückung der zweiten Zwischenbahn-Spleißvorrichtung 33 und Entfernung von Rest-Papierrollen 27 verfahrbar. Ein umlaufender Transport der Papierrollen-Transportwagen 5 in einer Richtung zur Bestückung der zweiten Zwischenbahn-Spleißvorrichtung 33 und Entfernung einer Rest-Papierrolle 27 entlang des zweiten Zwischenbahnwegs 90 ist auch möglich.

An den Verteilweg 40a schließt sich ein Kaschierbahnweg 97 an. An den ersten Verteilwegabschnitt 68 und zweiten Verteilwegabschnitt 69 schließt sich der Kaschierbahnweg 97 an, der quasi endlos ist und einen ersten Kaschierbahnwegabschnitt 98 und einen zweiten Kaschierbahnwegabschnitt 99 umfasst. Die Kaschierbahnwegabschnitte 98, 99 erstrecken sich parallel zueinander und zu den Deckbahnwegabschnitten 70, 71. Sie fluchten mit den Abrolleinheiten der Kaschierbahn-Spleißvorrichtung 34. Der erste Kaschierbahnwegabschnitt 98 schließt sich über einen Doppelbogen 100 an den ersten Verteilwegabschnitt 68 und über einen Doppelbogen 101 an den zweiten Verteilwegabschnitt 69 an. Der zweite Kaschierbahnwegabschnitt 99 schließt sich über einen Doppelbogen 102 an den ersten Verteilwegabschnitt 68 und über einen Doppelbogen 103 an den zweiten Verteilwegabschnitt 69 an. Der erste und zweite Kaschierbahnwegabschnitt 98, 99 durchsetzen die Wellpappe-Herstellungslinie bei der jeweiligen Abrolleinheit und sind jenseits der Wellpappe-Herstellungslinie miteinander verbunden.

Die Papierrollen-Transportwagen 5 sind sowohl auf dem ersten Kaschierbahnwegabschnitt 98 als auch auf dem zweiten Kaschierbahnwegabschnitt 99 in gegensinniggen Richtungen zur Bestückung der Kaschierbahn-Spleißvorrichtung 34 und Entfernung von Rest-Papierrollen 27 verfahrbar. Ein umlaufender Transport der Papierrollen-Transportwagen 5 in einer Richtung zur Bestückung der Kaschierbahn-Spleißvorrichtung 34 und Entfernung einer Rest-Papierrolle 27 entlang des Kaschierbahnwegs 97 ist auch möglich.

Die Deckbahnwege 43a, 83, Zwischenbahnwege 76, 90 und der Kaschierbahnweg 97 sind beabstandet zueinander an den Verteilweg 40a angeschlossen und verlaufen beabstandet zueinander. Sie befinden sich in einem Laserscanner-Schutzbereich 50.

Nachfolgend wird der Transport der Papierrollen 27 über die Papierrollen-Transportwagen 5 in der Wellpappeanlage näher erläutert. Im Vergleich mit der vorherigen Ausführungsform fährt jeder Papierrollen-Transportwagen 5 im Betrieb von dem Zuführ-Abführweg 39 stets über die zweite Weiche 42 auf den Verteilweg 40a. Jeder Papierrollen-Transportwagen 5 fährt über den ersten Verteilwegabschnitt 68 auf den zweiten Verteilwegabschnitt 69. Die zentrale Steuereinrichtung 65 schickt den beladenen Papierrollen-Transportwagen 5 zu der die Papierrolle 27 benötigenden Spleißvorrichtung 29, 30, 32, 33, 34 über den entsprechenden Weg 70, 71, 77, 78, 84, 85, 91, 92, 98 bzw. 99.

Wenn die erste Deckbahn-Spleißvorrichtung 29 neu mit der Papierrolle 27 bestückt werden soll, so fährt der Papierrollen-Transportwagen 5 über den Bogen 73 oder den Bogen 75 von dem zweiten Verteilwegabschnitt 69 auf den Deckbahnwegabschnitt 70 bzw. 71. In Abhängigkeit der erforderlichen Bestückung der ersten oder zweiten Abrolleinheit der ersten Deckbahn-Spleißvorrichtung 29 wird der entsprechende Deckbahnwegabschnitt 70, 71 gewählt.

Über den Bogen 72 bzw. den Bogen 74 ist der Papierrollen-Transportwagen 5 mit einer Rest-Papierrolle 27 von dem jeweiligen Deckbahnabschnitt 70, 71 auf den ersten Verteilwegabschnitt 68 rückführbar und ist von dort über die erste Weiche 41 und den Zuführ-Abführweg 39 zurück zu dem Papierrollenlager 36 fahrbar. Der Papierrollen-Transportwagen 5 fährt dabei im Vergleich mit der Bestückung in einer gegensinnigen Richtung.

Wenn die erste Zwischenbahn-Spleißvorrichtung 30 neu mit der Papierrolle 27 bestückt werden soll, so fährt der Papierrollen-Transportwagen 5 über den Doppelbogen 80 oder den Doppelbogen 82 von dem zweiten Verteilwegabschnitt 69 auf den Zwischenbahnwegabschnitt 77 bzw. 78. In Abhängigkeit der erforderlichen Bestückung der ersten oder zweiten Abrolleinheit der ersten Zwischenbahn-Spleißvorrichtung 30 wird der entsprechende Zwischenbahnwegabschnitt 77, 78 gewählt. Der Papierrollen-Transportwagen 5 kann auch über den Doppelbogen 79 oder den Doppelbogen 81 von dem ersten Verteilwegabschnitt 68 auf den Zwischenbahnwegabschnitt 77 bzw. 78 gelangen.

Über den Doppelbogen 79 bzw. den Doppelbogen 81 ist der Papierrollen-Transportwagen 5 mit einer Rest-Papierrolle 27 von dem jeweiligen Zwischenbahnwegabschnitt 77, 78 auf den ersten Verteilwegabschnitt 68 rückführbar. Über den Doppelbogen 80 bzw. den Doppelbogen 82 ist der Papierrollen-Transportwagen 5 mit einer Rest-Papierrolle 27 auf den zweiten Verteilwegabschnitt 69 rückführbar. Der Papierrollen-Transportwagen 5 fährt dabei im Vergleich mit der Bestückung in einer gegensinnigen Richtung. Er ist über die erste Weiche 41 und den Zuführ-Abführweg 39 zurück zu dem Papierrollenlager 36 fahrbar.

Wenn die zweite Deckbahn-Spleißvorrichtung 32 neu mit der Papierrolle 27 bestückt werden soll, so fährt der Papierrollen-Transportwagen 5 über den Doppelbogen 87 oder den Doppelbogen 89 von dem zweiten Verteilwegabschnitt 69 auf den Deckbahnwegabschnitt 84 bzw. 85. In Abhängigkeit der erforderlichen Bestückung der ersten oder zweiten Abrolleinheit der zweiten Deckbahn-Spleißvorrichtung 32 wird der entsprechende Deckbahnwegabschnitt 84, 85 gewählt. Der Papierrollen-Transportwagen 5 kann auch über den Doppelbogen 86 oder den Doppelbogen 88 von dem ersten Verteilwegabschnitt 68 auf den Deckbahnwegabschnitt 84 bzw. 85 gelangen.

Über den Doppelbogen 86 bzw. den Doppelbogen 88 ist der Papierrollen-Transportwagen 5 mit einer Rest-Papierrolle 27 von dem jeweiligen Deckbahnwegabschnitt 84, 85 auf den ersten Verteilwegabschnitt 68 rückführbar. Über den Doppelbogen 87 bzw. den Doppelbogen 89 ist der Papierrollen-Transportwagen 5 mit einer Rest-Papierrolle 27 auf den zweiten Verteilwegabschnitt 69 rückführbar. Der Papierrollen-Transportwagen 5 fährt dabei im Vergleich mit der Bestückung in einer gegensinnigen Richtung. Er ist über die erste Weiche 41 und den Zuführ-Abführweg 39 zurück zu dem Papierrollenlager 36 fahrbar.

Wenn die zweite Zwischenbahn-Spleißvorrichtung 33 neu mit der Papierrolle 27 bestückt werden soll, so fährt der Papierrollen-Transportwagen 5 über den Doppelbogen 94 oder den Doppelbogen 96 von dem zweiten Verteilwegabschnitt 69 auf den Zwischenbahnwegabschnitt 91 bzw. 92. In Abhängigkeit der erforderlichen Bestückung der ersten oder zweiten Abrolleinheit der zweiten Zwischenbahn-Spleißvorrichtung 33 wird der entsprechende Zwischenbahnwegabschnitt 91, 92 gewählt. Der Papierrollen-Transportwagen 5 kann auch über den Doppelbogen 93 oder den Doppelbogen 95 von dem ersten Verteilwegabschnitt 68 auf den Zwischenbahnwegabschnitt 91 bzw. 92 gelangen.

Über den Doppelbogen 93 bzw. den Doppelbogen 95 ist der Papierrollen-Transportwagen 5 mit einer Rest-Papierrolle 27 von dem jeweiligen Zwischenbahnwegabschnitt 91, 92 auf den ersten Verteilwegabschnitt 68 rückführbar. Über den Doppelbogen 94 bzw. den Doppelbogen 96 ist der Papierrollen-Transportwagen 5 mit einer Rest-Papierrolle 27 auf den zweiten Verteilwegabschnitt 69 rückführbar. Der Papierrollen-Transportwagen 5 fährt dabei im Vergleich mit der Bestückung in einer gegensinnigen Richtung. Er ist über die erste Weiche 41 und den Zuführ-Abführweg 39 zurück zu dem Papierrollenlager 36 fahrbar.

Wenn die Kaschierbahn-Spleißvorrichtung 34 neu mit der Papierrolle 27 bestückt werden soll, so fährt der Papierrollen-Transportwagen 5 über den Doppelbogen 101 oder den Doppelbogen 103 von dem zweiten Verteilwegabschnitt 69 auf den Kaschierbahnwegabschnitt 98 bzw. 99. In Abhängigkeit der erforderlichen Bestückung der ersten oder zweiten Abrolleinheit der Kaschierbahn-Spleißvorrichtung 34 wird der entsprechende Kaschierbahnwegabschnitt 98, 99 gewählt. Der Papierrollen-Transportwagen 5 kann auch über den Doppelbogen 100 oder den Doppelbogen 102 von dem ersten Verteilwegabschnitt 68 auf den Kaschierbahnwegabschnitt 77 bzw. 78 gelangen.

Über den Doppelbogen 100 bzw. den Doppelbogen 101 ist der Papierrollen-Transportwagen 5 mit einer Rest-Papierrolle 27 von dem jeweiligen Kaschierbahnwegabschnitt 98, 99 auf den ersten Verteilwegabschnitt 68 rückführbar. Über den Doppelbogen 101 bzw. den Doppelbogen 103 ist der Papierrollen-Transportwagen 5 mit einer Rest-Papierrolle 27 auf den zweiten Verteilwegabschnitt 69 rückführbar. Der Papierrollen-Transportwagen 5 fährt dabei im Vergleich mit der Bestückung in einer gegensinnigen Richtung. Er ist über die erste Weiche 41 und den Zuführ-Abführweg 39 zurück zu dem Papierrollenlager 36 fahrbar.

## Patentansprüche

1. Transportwagen zum Transport von Materialrollen (27), insbesondere in einer Wellpappeanlage, umfassend
a) ein Gestell (1),
b) mindestens drei mit dem Gestell (1) in Verbindung stehende Laufeinheiten (9, 11) zum Laufen auf einem Untergrund,
c) mindestens einen mit dem Gestell (1) in Verbindung stehenden Verfahrantrieb (8) zum Antreiben von mindestens einer der Laufeinheiten (9),
d) eine von dem Gestell (1) getragene Materialrollenaufnahme (2) zum Aufnehmen einer zu transportierenden Materialrolle (27), und
e) eine mit dem Gestell (1) in Verbindung stehende Kommunikationseinrichtung (4) mit einer Empfangseinheit zum Empfangen externer Informationen, wobei die Kommunikationseinrichtung (4)
i. mit dem mindestens einen Verfahrantrieb (8) zum Ansteuern desselben in Signalverbindung steht,
**dadurch gekennzeichnet, dass**
f) die Materialrollenaufnahme (2)
i. gegenüber dem Gestell (1) mittels mindestens einer Federeinheit (14) abgestützt ist, und
ii. unten mindestens ein Abstützelement (67) zur Abstützung gegenüber einem Untergrund bei Kompression der mindestens einen Federeinheit (14) aufweist.

2. Transportwagen nach Anspruch 1, **dadurch gekennzeichnet, dass** die Materialrollenaufnahme (2) in ihrer Transportstellung an ihrer tiefsten Aufnahmestelle höchstens einen Abstand von 100 mm gegenüber dem Untergrund hat.

3. Transportwagen nach Anspruch 1 oder 2, **dadurch gekennzeichnet, dass** die mindestens eine Federeinheit (14) vorgespannt ist.

4. Transportwagen nach einem der vorherigen Ansprüche, **gekennzeichnet durch** eine zwischen der Materialrollenaufnahme (2) und dem Gestell (1) wirkende Führung (16) zur geführten vertikalen Verlagerung der Materialrollenaufnahme (2) gegenüber dem Gestell (1).

5. Transportwagen nach einem der vorherigen Ansprüche, **gekennzeichnet durch** eine Energiespeichereinheit (18) zum Abgeben von elektrischer Energie an den mindestens einen Verfahrantrieb (8).

6. Transportwagen nach einem der vorherigen Ansprüche, **gekennzeichnet durch** einen Materialrollen-Erkennungssensor (26) zum Erkennen eines Beladungszustandes des Transportwagens (5).

7. Transportwagen nach einem der vorherigen Ansprüche, **gekennzeichnet durch** mindestens eine Sicherheitseinrichtung (22) zum Verhindern von Unfällen, wobei die mindestens eine Sicherheitseinrichtung (22) vorzugsweise optischer Art ist.

8. Transportwagen nach einem der vorherigen Ansprüche, **gekennzeichnet durch** mindestens eine Verfahrweg-Erkennungseinrichtung (24) zum Steuern des Transportwagens (5) entlang eines vorgegebenen Verfahrwegs.

9. Transportwagen nach einem der Ansprüche 1 bis 7, **dadurch gekennzeichnet, dass** er entlang eines imaginären Verfahrwegs verfahrbar ist, der ein fiktiv vorgegebener Verfahrweg ist und beispielsweise in Software definiert ist.

10. Transportwagen nach einem der vorherigen Ansprüche, **dadurch gekennzeichnet, dass** die Empfangseinheit im Stande ist, Fahr- und/oder Zielinformationen zu empfangen.

11. Transportwagen nach einem der vorherigen Ansprüche, **gekennzeichnet durch** mindestens eine Hilfs-Steuereinrichtung (63) zur Verbindung mit einer externen Hilfs-Steuerung (64) zum manuellen Ansteuern des Transportwagens (5).

12. Transportwagen nach einem der vorherigen Ansprüche, **gekennzeichnet durch** mindestens eine Notaus-Einrichtung (23) zum schnellen Versetzen des Transportwagens (5) in einen sicheren Zustand.

13. Transportwagen nach einem der vorherigen Ansprüche, **dadurch gekennzeichnet, dass** er eigenständig ansteuerbar ist, sodass, wenn mehrere Transportwagen (5) vorhanden sind, diese unterschiedlich ansteuerbar sind.

14. Transportwagen nach einem der vorherigen Ansprüche, **dadurch gekennzeichnet, dass** er, insbesondere durch entsprechende Ansteuerung, lenkbar ist.

15. Transportwagen nach einem der vorherigen Ansprüche, **gekennzeichnet durch** sechs der Laufeinheiten (9, 11),
a) wobei vier der Laufeinheiten (11) bei Eckbereichen des Gestells (1) auslenkbar angeordnet sind, und
b) wobei zwei der Laufeinheiten (9) in einem Mittenbereich des Gestells (1) drehantreibbar angeordnet sind, wobei vorzugsweise jede der drehantreibbaren Laufeinheiten (9) von einem eigenen Verfahrantrieb (8) zum Verfahren und Auslenken des Transportwagens (5) drehantreibbar ist.

16. Wellpappeanlage mit mindestens einem Transportwagen (5) nach einem der Ansprüche 1 bis 15.

17. Wellpappeanlage nach Anspruch 16, **dadurch gekennzeichnet, dass** der mindestens eine Transportwagen (5) im Stande ist, Kreuzungen zu fahren.

## Claims

1. A transport trolley for transporting material rolls (27), in particular in a corrugated board plant, comprising
a) a frame (1),
b) at least three running units (9, 11) connected to the frame (1) for running on a surface,
c) at least one movement drive (8) connected to the frame (1) for driving at least one of the running units (9),
d) a material roll receiving means (2) supported by the frame (1) for receiving a material roll (27) to be transported, and
e) a communication device (4) connected to the frame (1) and comprising a receiver unit for receiving external information, wherein the communication device (4)
i. is in signal connection with the at least one movement drive (8) for actuating the latter,
**characterized in that**
f) the material roll receiving means (2)
i. is supported with respect to the frame (1) by means of at least one spring unit (14), and
ii. has, at the bottom, at least one supporting element (67) for support with respect to a ground in case of compression of the at least one spring unit (14).

2. A transport trolley as claimed in claim 1, **characterized in that** the material roll receiving means (2) is at most at a spacing of 100 mm with respect to the ground at its lowest receiving point in its transport position.

3. A transport trolley as claimed in claim 1 or 2, **characterized in that** the at least one spring unit (14) is prestressed.

4. A transport trolley as claimed in one of the preceding claims, **characterized by** a guide (16) for a guided vertical movement of the material roll receiving means (2) with respect to the frame (1), acting between the material roll receiving means (2) and the frame (1).

5. A transport trolley as claimed in one of the preceding claims, **characterized by** an energy storage unit (18) for outputting electric energy to the at least one movement drive (8).

6. A transport trolley as claimed in one of the preceding claims, **characterized by** a material roll detection sensor (26) for detecting a loading state of the transport trolley (5).

7. A transport trolley as claimed in one of the preceding claims, **characterized by** at least one safety device (22) for preventing accidents, said at least one safety device (22) preferably being of a visual type.

8. A transport trolley as claimed in one of the preceding claims, **characterized by** at least one movement path detection device (24) for controlling the transport trolley (5) along a predefined movement path.

9. A transport trolley as claimed in one of claims 1 to 7, **characterized in that** it is movable along an imaginary movement path which is a fictitiously predefined movement path and is defined, for example, in software.

10. A transport trolley as claimed in one of the preceding claims, **characterized in that** the receiver unit is capable of receiving moving and/or target information.

11. A transport trolley as claimed in one of the preceding claims, **characterized by** at least one auxiliary control device (63) for connecting to an external auxiliary controller (64) for manual actuating of the transport trolley (5).

12. A transport trolley as claimed in one of the preceding claims, **characterized by** at least one emergency shutdown device (23) for rapidly setting the transport trolley (5) into a safe state.

13. A transport trolley as claimed in one of the preceding claims, **characterized in that** it is actuatable autonomously, so that if several transport trolleys (5) are present, they can be actuated differently.

14. A transport trolley as claimed in one of the preceding claims, **characterized in that** it is steerable, in particular by way of corresponding actuation.

15. A transport trolley as claimed in one of the preceding claims, **characterized by** six of the running units (9, 11),
a) four of the running units (11) being arranged in corner regions of the frame (1) in a deflectable manner, and
b) two of the running units (9) being arranged in a centre region of the frame (1) in a rotationally drivable manner, wherein each of the rotationally drivable running units (9) preferably is rotationally drivable by an own movement drive (8) for moving and deflecting the transport trolley (5).

16. A corrugated board plant with at least one transport trolley (5) as claimed in one of claims 1 to 15.

17. A corrugated board plant as claimed in claim 16, **characterized in that** the at least one transport trolley (5) is capable of navigating crossroads.

## Revendications

1. Chariot de transport pour le transport de rouleaux de matériau (27), en particulier dans une installation de carton ondulé, comprenant
a) un châssis (1),
b) au moins trois unités de roulement (9, 11) associées au châssis (1) pour rouler sur un sol,
c) au moins un entraînement de déplacement (8) en liaison avec le châssis (1) pour l'entraînement d'au moins une des unités de roulement (9),
d) un logement de rouleau de matériau (2) porté par le châssis (1) pour recevoir un rouleau de matériau (27) à transporter, et
e) un dispositif de communication (4) en liaison avec le châssis (1) et comportant une unité de réception pour recevoir des informations externes, le dispositif de communication (4)
i. étant en liaison de signalisation avec l'au moins un entraînement de déplacement (8) pour commander ce dernier,
**caractérisé en ce que**
f) le logement de rouleau de matériau (2)
i. est supporté par rapport au châssis (1) au moyen d'au moins une unité de ressort (14), et
ii. en bas, au moins un élément d'appui (67) pour l'appui par rapport à un sol en cas de compression de l'au moins une unité de ressort (14).

2. Chariot de transport selon la revendication 1, **caractérisé en ce que** le logement de rouleau de matériau (2), dans sa position de transport, a une distance de 100 mm au maximum par rapport au sol à son point de logement le plus bas.

3. Chariot de transport selon la revendication 1 ou 2, **caractérisé en ce que** l'au moins une unité de ressort (14) est précontrainte.

4. Chariot de transport selon l'une quelconque des revendications précédentes, **caractérisé par** un guide (16) agissant entre le logement de rouleau de matériau (2) et le châssis (1) pour le déplacement vertical guidé du logement de rouleau de matériau (2) par rapport au châssis (1).

5. Chariot de transport selon l'une quelconque des revendications précédentes, **caractérisé par** une unité d'accumulation d'énergie (18) pour fournir de l'énergie électrique à l'au moins un entraînement de déplacement (8).

6. Chariot de transport selon l'une quelconque des revendications précédentes, **caractérisé par** un capteur de détection de rouleau de matériau (26) pour détecter un état de chargement du chariot de transport (5).

7. Chariot de transport selon l'une quelconque des revendications précédentes, **caractérisé par** au moins un dispositif de sécurité (22) pour éviter les accidents, ledit au moins un dispositif de sécurité (22) étant de préférence de type optique.

8. Chariot de transport selon l'une quelconque des revendications précédentes, **caractérisé par** au moins un dispositif de détection de trajet de déplacement (24) pour commander le chariot de transport (5) le long d'un trajet de déplacement prédéfini.

9. Chariot de transport selon l'une quelconque des revendications 1 à 7, **caractérisé en ce qu'il** peut être déplacé le long d'une trajectoire imaginaire qui est une trajectoire fictive prédéterminée et qui est par exemple définie dans un logiciel.

10. Chariot de transport selon l'une quelconque des revendications précédentes, **caractérisé en ce que** l'unité de réception est capable de recevoir des informations de déplacement et/ou de destination.

11. Chariot de transport selon l'une quelconque des revendications précédentes, **caractérisé par** au moins un dispositif de commande auxiliaire (63) destiné à être relié à une commande auxiliaire externe (64) pour commander manuellement le chariot de transport (5).

12. Chariot de transport selon l'une quelconque des revendications précédentes, **caractérisé par** au moins un dispositif d'arrêt d'urgence (23) pour mettre rapidement le chariot de transport (5) dans un état sûr.

13. Chariot de transport selon l'une quelconque des revendications précédentes, **caractérisé en ce qu'**il peut être commandé de manière autonome, de sorte que, lorsqu'il y a plusieurs chariots de transport (5), ceux-ci peuvent être commandés différemment.

14. Chariot de transport selon l'une quelconque des revendications précédentes, **caractérisé en ce qu'**il est dirigeable, en particulier par une commande correspondante.

15. Chariot de transport selon l'une quelconque des revendications précédentes, **caractérisé par** six des unités de roulement (9, 11),
a) quatre des unités de roulement (11) étant disposées de manière à pouvoir être déviées dans des zones d'angle du châssis (1), et
b) deux des unités de roulement (9) étant disposées de manière à pouvoir être entraînées en rotation dans une zone centrale du châssis (1), chacune des unités de roulement (9) pouvant de préférence être entraînée en rotation par un propre entraînement de déplacement (8) pour déplacer et dévier le chariot de transport (5).

16. Installation de carton ondulé comprenant au moins un chariot de transport (5) selon l'une quelconque des revendications 1 à 15.

17. Installation de carton ondulé selon la revendication 16, **caractérisée en ce que** l'au moins un chariot de transport (5) est capable d'effectuer des croisements.
